# EUROPEAN PATENT APPLICATION

(11) **EP 3 489 637 A1**
(43) Date of publication of application: **29.05.2019**
(21) Application number: 17830997.7
(22) Date of filing: 18.07.2017
(51) Int. Cl.: G01G 19/10, G01L 1/02, G01L 5/00

(54) **VEHICLE WEIGHT MEASUREMENT DEVICE**

(30) Priority: 19.07.2016 JP 2016141097; 28.02.2017 JP 2017036403
(71) Applicant: NSK Ltd., Tokyo 141-8560 (JP)
(72) Inventor: HIKIDA Masafumi, Fujisawa-shi Kanagawa 251-8501 (JP); SUZUKI Eisaku, Fujisawa-shi Kanagawa 251-8501 (JP); SUZUKI Shunsuke, Fujisawa-shi Kanagawa 251-8501 (JP); MATSUDA Yasuyuki, Fujisawa-shi Kanagawa 251-8501 (JP)
(74) Representative: Grünecker Patent- und Rechtsanwälte PartG mbB
(86) International application number: PCT/JP2017/025941
(87) International publication number: WO 2018/016481

(57) **Abstract**

A weight measurement device includes a bottom plate (200) for coming in contact with an arm of a suspension device, a piston (300) capable of pressing a diaphragm (230) for forming an oil chamber (201) on a top surface side of the bottom plate, and a pressure sensor (400) for detecting the pressure of a measurement fluid (R) in the oil chamber on a bottom surface side of the bottom plate, and is provided with an oil discharge hole part (240) communicated with an atmosphere side and the inside of the oil chamber and capable of discharging excess working fluid from inside the oil chamber, and a blocking part (242) for discharging the excess measurement fluid (R), and blocking the oil discharge hole part after the internal pressure is equilibrated with atmospheric pressure in a state in which no load is applied, the blocking part (242) being provided to the oil discharge hole part.

## Description

### Technical Field

The present invention relates to a device for measuring a weight of a vehicle, and in particular to a weight measuring device for a vehicle which is installed in a suspension of an automobile and detects overloading.

### Background Art

In automobiles, especially commercial vehicles such as trucks and vans carrying various kinds of cargoes, illegal overloading where the vehicle travels on a road with cargoes beyond a statutory loading amount becomes a social problem. This is because carrying more cargo at a time can lower transportation costs.

However, such overloading may cause the following various problems and should be avoided.
(1) Due to the overloading, a kinematic performance of an automobile may deteriorate or components thereof may be damaged, which may cause an accident. For example, there are many factors causing accidents, such as damage to an axle (hub), breakage (burst) of a tire, a less effective brake due to the overheated brake by a lengthened braking distance, and easy rollover of a vehicle.
(2) Overloading heavily damages a road and this causes a road maintenance cost.

There are many reasons why it is difficult to prevent such overloading, but one of them is that the loading weight cannot be easily recognized from a driver, a passenger, or the like.

That is, conventionally, load measurement (load weight measurement) of a vehicle has been carried out by placing a measuring target vehicle on a platform scale.

However, the installation of a platform scale requires a large installation space due to a large-scaled facility and the installation cost increases. Therefore, the number of platform scales which can be installed is limited, and thus it is physically not possible to measure a lot of vehicles.

In view of this, recently, many kinds of simple load measuring devices which are mounted on a vehicle and can measure a load (weight) have been proposed as disclosed in Patent Document 1 and the like.

For example, the prior art disclosed in Patent Document 1 discloses a simple load measuring device which is constituted of a base assembly of which two welded portions are welded to different attachment points of a load-receiving member expanding or contracting by receiving a load of a vehicle, a compressive strain detecting sensor element which is supported by the base assembly and of which output changes due to expansion or contraction of the base assembly in a direction in which the two welded portions move toward or away from each other in accordance with a change in a load applied to the vehicle, and a circuit board on which an amplifier for amplifying the output of the compressive strain detecting sensor element is mounted and measures a load by detecting the compressive strain.

### Prior Art Document

### Patent Document

Patent Document 1: JP-A-2001-330503

### Summary of the Invention

### Problems to be Solved by the Invention

Such a load measuring device is generally roughly divided into two functional blocks.

A first functional block is a load detection unit which is constituted of a hydraulic chamber (oil chamber) filled with measurement fluid (hydraulic oil), a diaphragm constituting a part of the oil chamber so as to be able to be pressure-deformable, and a pressure sensor provided in communication with the oil chamber and detecting a pressure change in the oil chamber due to the pressing of the diaphragm and fixed to a vehicle.

A second functional block is a piston portion which moves in accordance with the load by a resilient force of a spring or the like and presses the diaphragm.

When the load detection unit is installed in a suspension for a rear wheel of a vehicle, the diaphragm and the pressure sensor of the load detection unit are attached to a bottom plate and, when the load detection unit is installed in a suspension for a front wheel of the vehicle, the diaphragm and the pressure sensor of the load detection unit are attached to a mounting portion (top plate).

In this case, in order to seal the leakage of the measurement fluid and fix the pressure sensor, a sealing structure using a thread such as a taper thread or the like is used as a structure for attaching the pressure sensor to the bottom plate (or mounting portion). The sealing structure using such a thread is generally widely used for the purpose of sealing a liquid because it is easy to manufacture.

However, in the sealing structure using the thread as described above, the pressure sensor moves in an axial direction by an action of the thread when the pressure sensor is fixedly fastened, and thus the pressure sensor is fixedly fastened so as to push the measurement fluid away. The measurement fluid is in equilibrium with the atmospheric pressure in the oil chamber before the pressure sensor is fixed. However, due to the fixation of the pressure sensor, the measurement fluid becomes excessive with respect to the volume of the oil chamber and the results in an increase in pressure in the oil chamber.

In general, the measurement fluid has no compressibility or a very low compressibility. However, the amount of the measurement fluid is extremely small, so even when the advancing amount of the pressure sensor due to screwing is very small, it greatly affects the pressure in the oil chamber.

Further, even when the pressure sensors are fixedly fastened with the same fastening torque, there are individual differences in the advancing amounts of the pressure sensors due to the screwing depending on the machining accuracy of the threads. As a result, there are also individual differences in the degrees of a pressure increase in the oil chambers.

As described above, it is extremely difficult to constantly control the pressure increase in the oil chamber due to thread tightening.

Further, in this type of a weight measuring device, it is necessary to perform sealing such that the hydraulic oil does not leak out from a gap between the diaphragm constituting the oil chamber and the bottom plate (or top plate) and the applicant of the present application provides a structure in which a plurality of O-rings are arranged to seal the leakage of the hydraulic oil from the area (Japanese Patent Application No. 2015-241305). However, the O-ring may come off during assembly. In addition, in order to improve the sealability of the O-ring, it is necessary to polish a seal contact surface, and as the number of the sealing portions increases, the cost for a polishing process increases.

The invention is made to solve the problems of the prior art and an object thereof is to provide a weight measuring device capable of constantly controlling a pressure in an oil chamber even when a pressure sensor is fixed by a thread. According to the invention, it is possible to improve assemblability and further improve a sealing performance and to achieve cost reduction.

### Means for Solving the Problems

In order to achieve the object, according to a first aspect of the invention, there is provided a weight measuring device for a vehicle including: a movable body which is moved by a resilient force of a spring; a diaphragm which is pressure-deformable by the movement of the movable body; an oil chamber which is filled with a predetermined measurement fluid and whose internal pressure can be changed by pressing of the diaphragm; a pressure sensor which can detect a pressure change in the oil chamber; an oil discharge hole portion which can discharge excess hydraulic oil in the oil chamber to the atmosphere side; and a sealing portion which is formed by sealing the oil discharge hole portion discharging the excess hydraulic oil.

According to a second aspect of the invention, in the first aspect of the invention, the weight measuring device further includes a mounting portion to which the pressure sensor is mounted and which cooperates with the diaphragm to form the oil chamber, and the oil discharge hole portion is formed in the mounting portion.

According to a third aspect of the invention, there is provided a weight measuring device for a vehicle including: a bottom plate which is disposed in a state where a lower surface side abuts on an arm of a suspension and has a groove portion open to an upper surface side; a diaphragm which covers an opening area of the groove portion and forms an oil chamber of a predetermined space filled with a predetermined measurement fluid together with the groove portion; an annular collar which is formed to have a diameter larger than an outer diameter of the opening area of the groove portion and seals and fixes a surface portion of the diaphragm which is the surface portion closer to an outer diameter by pinching the surface portion with a surface portion located further on an outer side than the opening area of the groove portion; a piston which is provided on an inner diameter side of the collar to be movable in a longitudinal direction of the suspension, disposed on an upper side of the collar with a gap between the piston and the collar, and can press the diaphragm by a resilient force of a spring of the suspension; a spring seat which receives one end of the spring and is interposed with respect to the piston; a pressure sensor which is provided on a lower surface side of the bottom plate and can detect a pressure change of the measurement fluid in the oil chamber which can be changed by movement of the piston; an oil discharge hole portion which can discharge excess hydraulic oil in the oil chamber to the atmosphere side; and a sealing portion which is formed by sealing the oil discharge hole portion through which the excess hydraulic oil has been discharged.

According to a fourth aspect of the invention, there is provided a weight measuring device for a vehicle which is provided in a suspension and includes: a mounting portion of which an upper surface side is fixed to a vehicle side and in which a groove portion open in an annular shape is provided on a lower surface side; an annular diaphragm which covers an opening area of the groove portion and forms an oil chamber of a predetermined space together with the groove portion; an annular inner collar which seals and fixes a surface portion of the diaphragm which is the surface portion closer to an inner diameter by pinching the surface portion with a surface portion located further on an inner side than the opening area of the groove portion; an annular outer collar which is formed to have a diameter larger than an outer diameter of the opening area of the groove portion and seals and fixes a surface portion of the diaphragm which is the surface portion closer to the outer diameter by pinching the surface portion with a surface portion located further on an outer side than the opening area of the groove portion; a piston which is provided between an outer diameter of the inner collar and an inner diameter of the outer collar to be movable in a longitudinal direction of the suspension and can press the diaphragm by a resilient force of a spring of the suspension; a bushing which receives one end of the spring; a bearing device which is interposed between the piston and the bushing and configured to be relatively rotatable; a pressure sensor which is provided on the mounting portion and can detect a pressure change of measurement fluid in the oil chamber which can be changed by movement of the piston; an oil discharge hole portion which can discharge excess hydraulic oil in the oil chamber to the atmosphere side; and a sealing portion which is formed by sealing the oil discharge hole portion through which the excess hydraulic oil has been discharged.

According to a fifth aspect of the invention, in the weight measuring device for a vehicle according to any one of first to fourth aspects of the invention, a sealing member is integrally molded in the diaphragm on at least a surface portion on a side facing the oil chamber.

According to a sixth aspect of the invention, in the weight measuring device for a vehicle according to any one of first to fourth aspects of the invention, sealing members are integrally molded in the diaphragm on a surface portion on a side facing the oil chamber and on a surface portion on an opposite side, respectively.

### Effect of the Invention

According to the invention, it is possible to provide a weight measuring device capable of constantly controlling a pressure in an oil chamber even when a pressure sensor is fixed by a thread. According to the invention, it is possible to improve assemblability and further improve a sealing performance and to achieve cost reduction.

### Brief Description of Drawings

Fig. 1 illustrates a front view of a weight measuring device for a rear wheel as an embodiment of a weight measuring device for a vehicle according to the present embodiment.
Fig. 2 illustrates the embodiment of the weight measuring device for a vehicle according to the present embodiment and is a longitudinal cross-sectional side view taken along the line A-A in Fig. 1.
Fig. 3 is an enlarged view of a region indicated by a reference character B in Fig. 2.
Fig. 4 is an enlarged view of the region indicated by the reference character B in Fig. 2 and illustrates another embodiment of a sealing portion for sealing an oil discharge hole portion.
Fig. 5 is a schematic perspective view illustrating a case where the weight measuring device of a vehicle according to the present embodiment is applied to a suspension of a trailing arm type.
Fig. 6 illustrates a front view of a weight measuring device for a front wheel as a weight measuring device for a vehicle according to a second embodiment of the present invention.
Fig. 7 is a longitudinal cross-sectional side view taken along the line A-A in Fig. 6.
Fig. 8 is an enlarged view of a region indicated by a reference character B in Fig. 7.
Fig. 9 is a longitudinal cross-sectional side view of a weight measuring device for a vehicle according to a third embodiment of the present invention.
Fig. 10 is an enlarged cross-sectional view of a region indicated by a reference character B in Fig. 9.
Figs. 11A to 11B illustrate a diaphragm used in the present embodiment in which Fig. 11A is a schematic longitudinal cross-sectional side view of the entirety of the diaphragm and Fig. 11B is an enlarged cross-sectional view of a region indicated by a reference character C in Fig. 11A.
Fig. 12 is an enlarged cross-sectional view of a main part according to a fourth embodiment of the present invention.
Figs. 13A and 13B illustrate a diaphragm used in the present embodiment in which Fig. 13A is a schematic longitudinal cross-sectional side view of the entirety of the diaphragm and Fig. 13B is an enlarged cross-sectional view of a region indicated by a reference character C in Fig. 13A.
Fig. 14 is an enlarged cross-sectional view of a main part according to a fifth embodiment of the present invention.
Figs. 15A and 15B illustrate a diaphragm used in the present embodiment in which Fig. 15A is a schematic longitudinal cross-sectional side view of the entirety of the diaphragm and Fig. 15B is an enlarged cross-sectional view of a region indicated by a reference character C in Fig. 15A.
Figs. 16A and 16B illustrate a collar used in the present embodiment in which Fig. 16A is a schematic longitudinal cross-sectional side view of the entirety of the collar and Fig. 16B is an enlarged cross-sectional view of a region indicated by a reference character C in Fig. 16A.
Fig. 17 is a longitudinal cross-sectional side view of a weight measuring device for a vehicle according to a sixth embodiment of the present invention.
Fig. 18 is an enlarged view of a region indicated by a reference character B in Fig. 17.
Figs. 19A and 19B illustrate a diaphragm used in the present embodiment in which Fig. 19A is a schematic longitudinal cross-sectional side view of the entirety of the diaphragm and Fig. 19B is an enlarged cross-sectional view of a region indicated by a reference character C in Fig. 19A.

### Description of Embodiments

In the present embodiment, an embodiment in which a weight measuring device for a vehicle 100 of the invention is used for a suspension 1 of an automobile is illustrated.

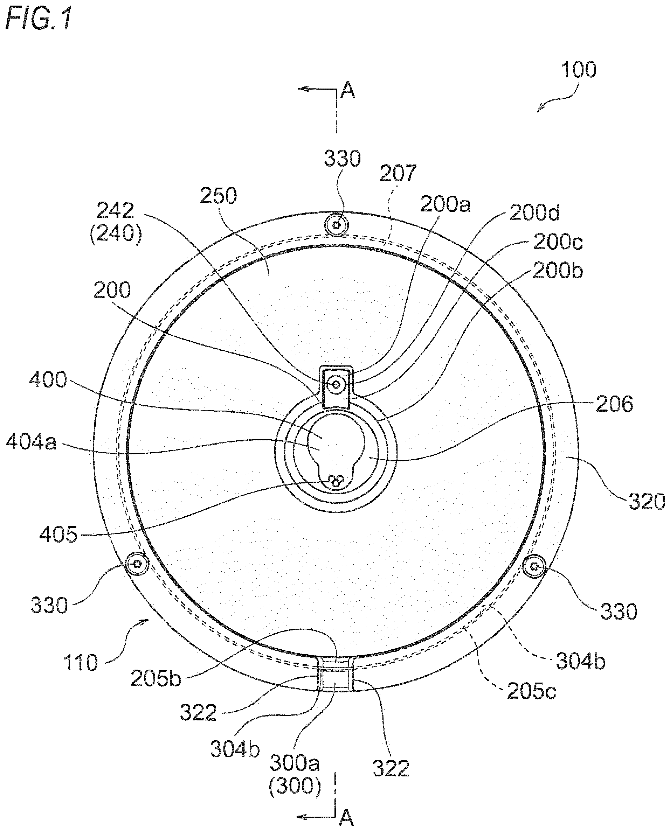

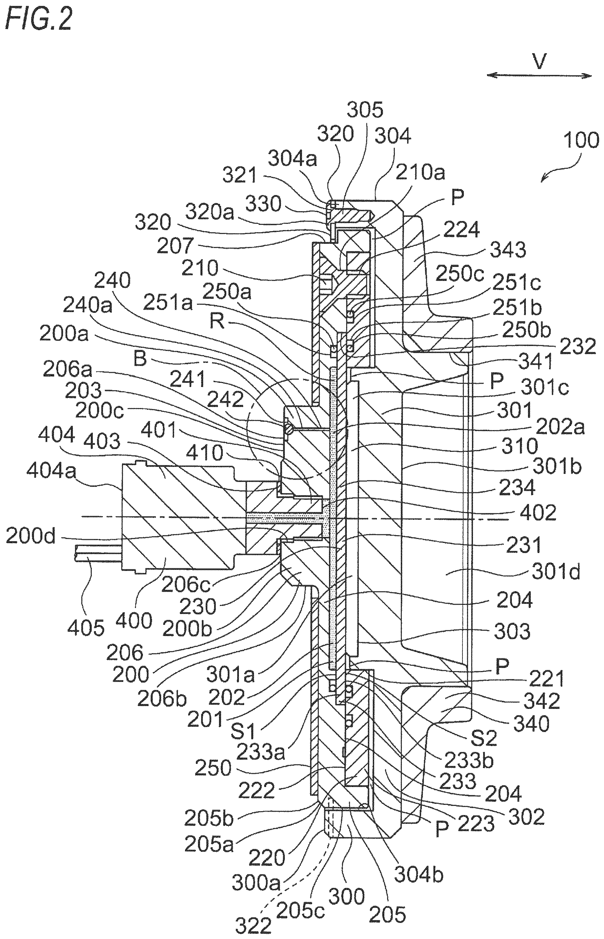

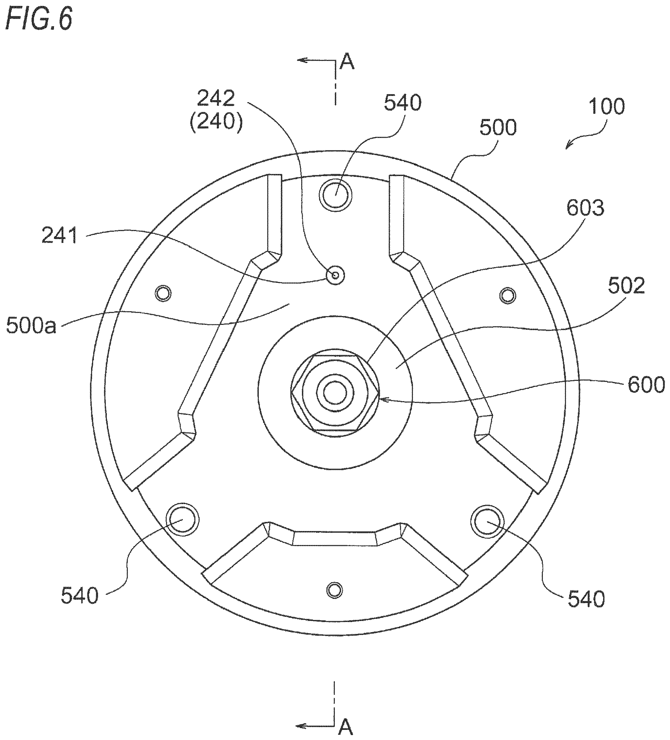

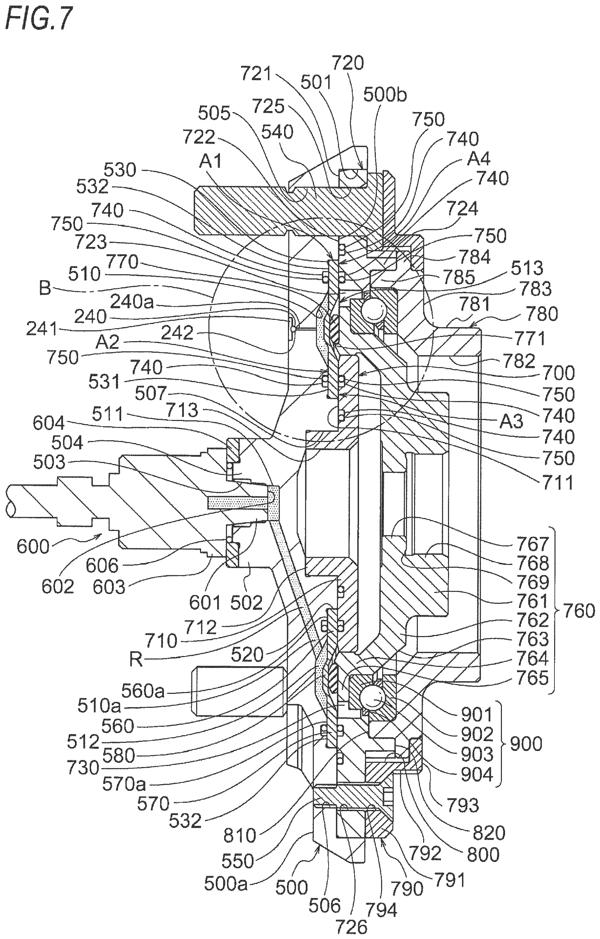

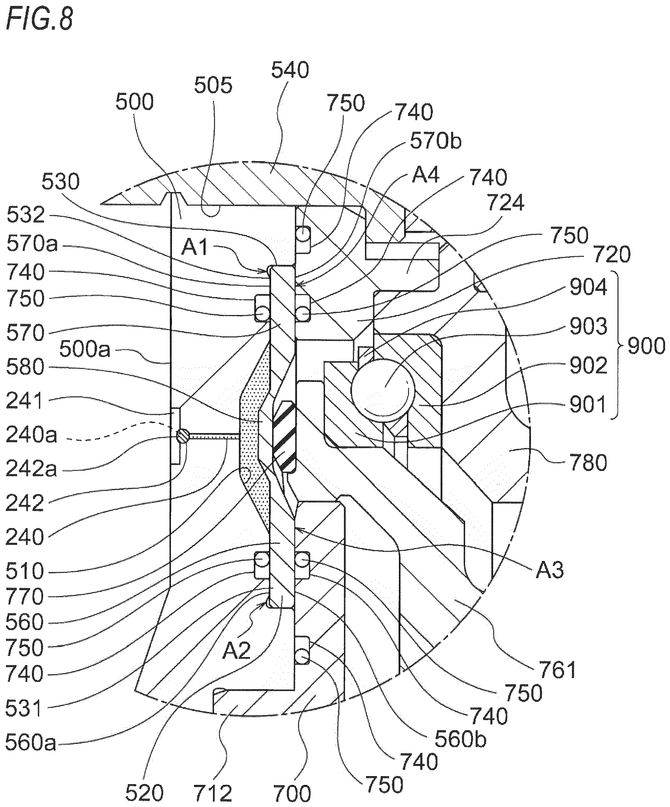

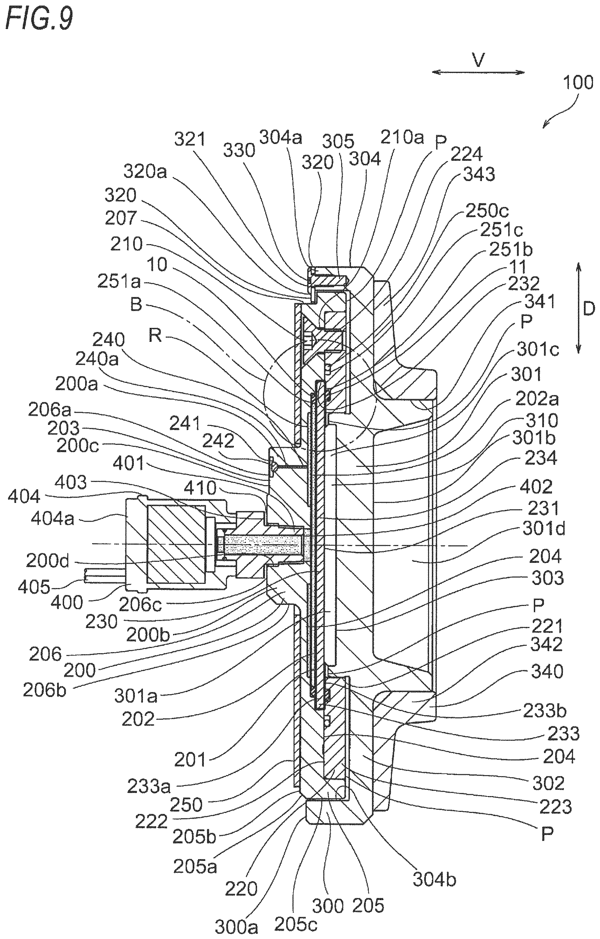

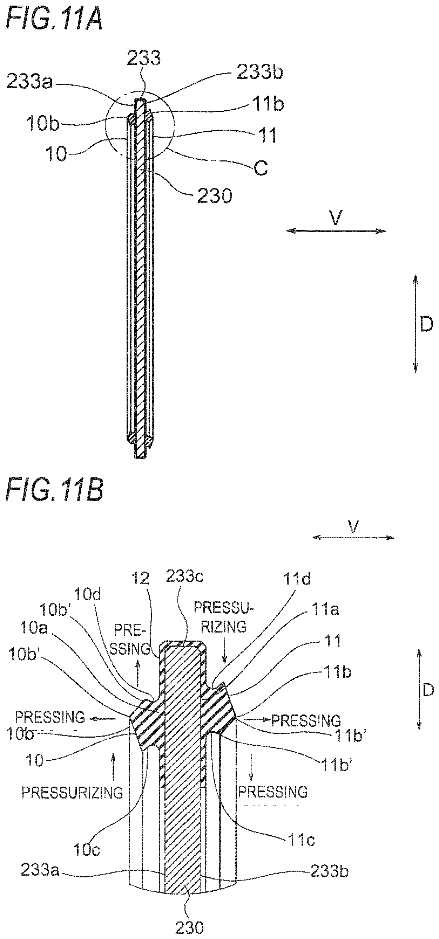

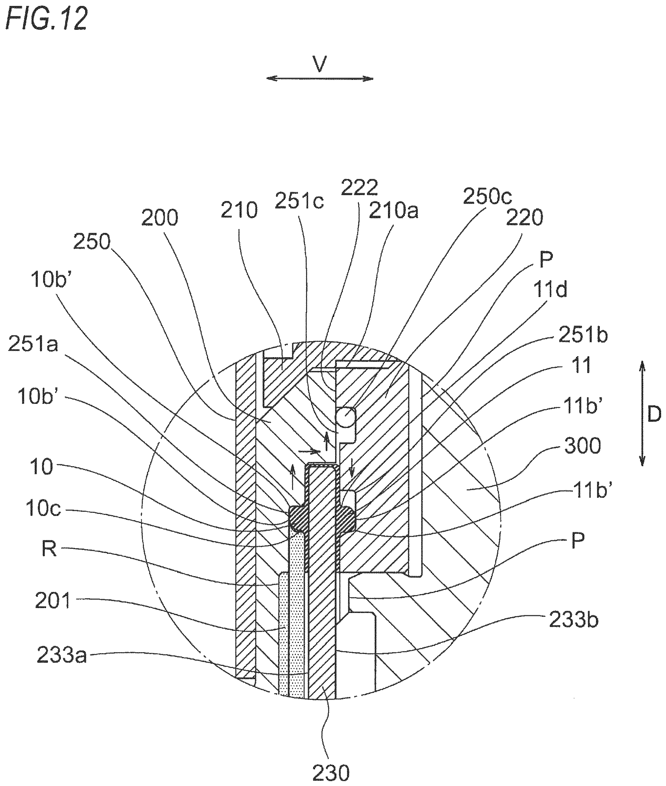

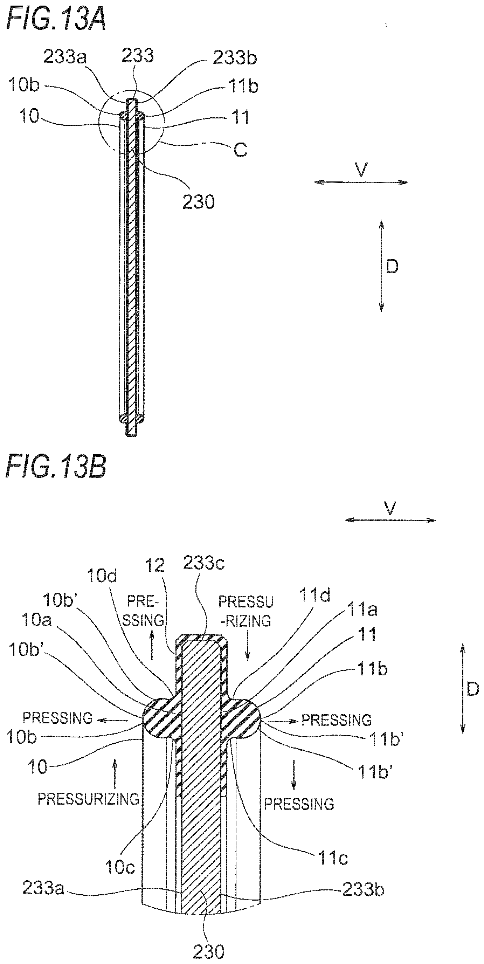

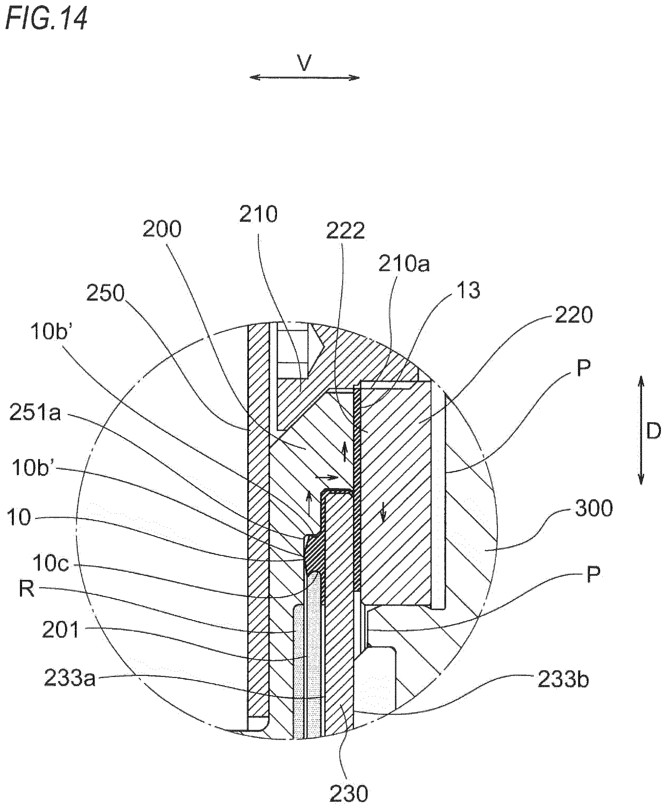

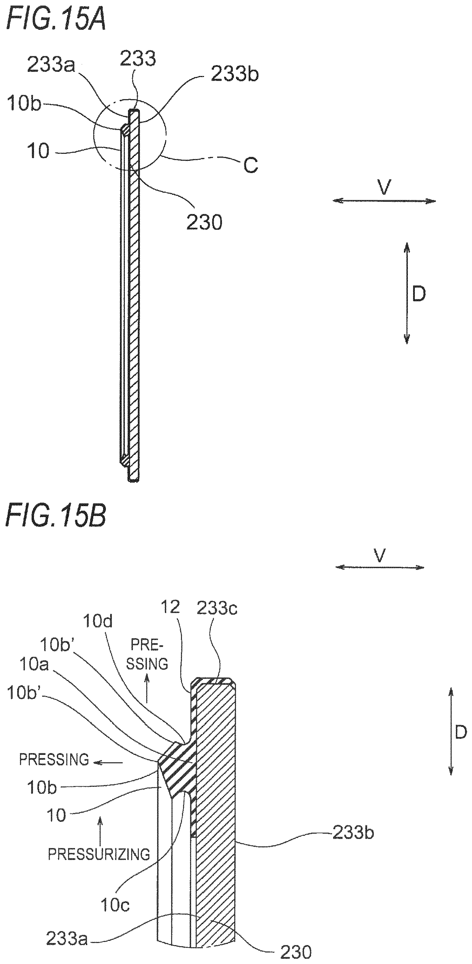

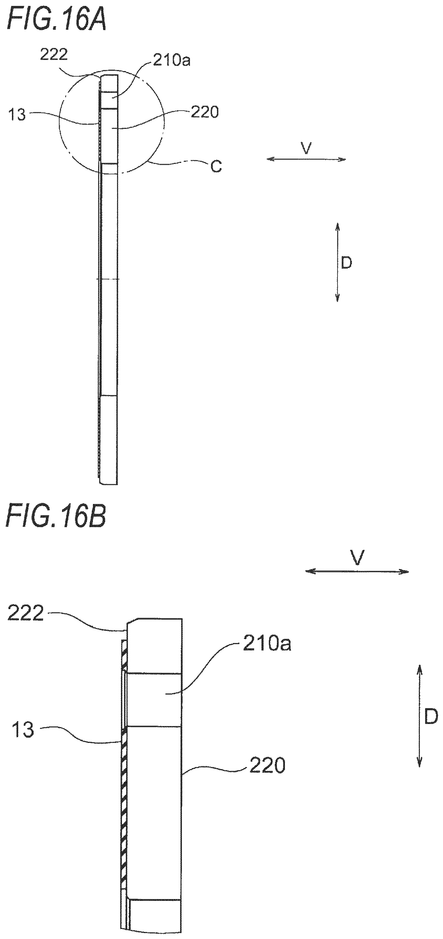

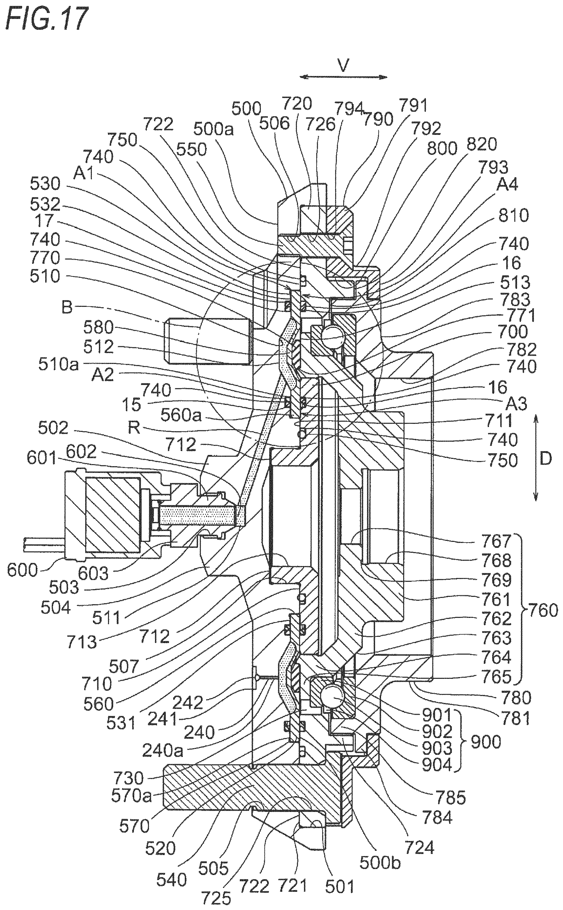

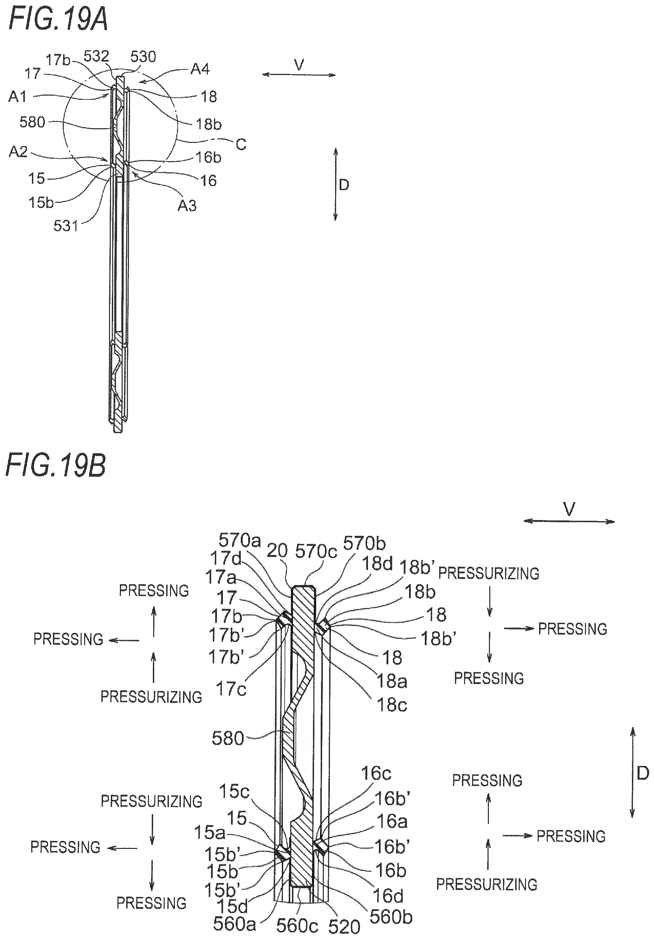

Hereinafter, an embodiment of a weight measuring device for a vehicle of the invention will be described with reference to the accompanying drawings. Figs. 1 to 5 illustrate a first embodiment of the invention, Figs. 6 to 8 illustrate a second embodiment of the invention, Figs. 9 to 11B illustrate a third embodiment, Figs. 12 and 13B illustrate a fourth embodiment, Figs. 14 to 16B illustrate a fifth embodiment, and Figs. 17 to 19B illustrate a sixth embodiment.

The present embodiment is an embodiment of the invention and is not to be construed as being limited to any particular limitation, and further, design change is possible within the scope of the invention.

### First Embodiment

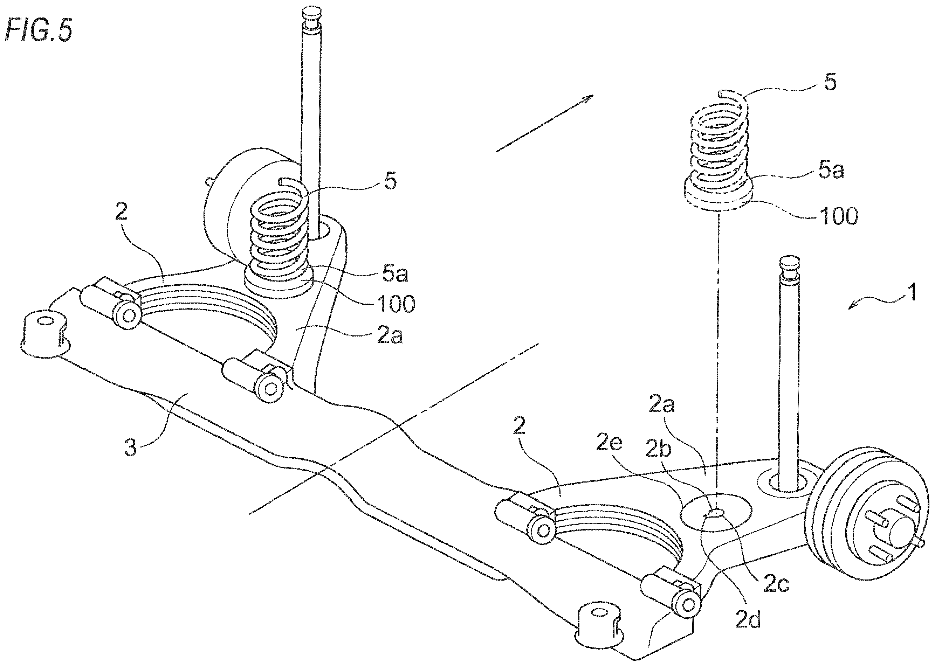

Fig. 5 illustrates an example in which the weight measuring device for a vehicle 100 according to the present embodiment is applied to the trailing-arm-type suspension 1 for a rear wheel of an automobile.

In the trailing arm type, an arm (suspension arm) 2 is journaled at right angles to a vehicle body center line (see a one-dot chain line in the drawing) from a suspension member 3 (constituent component of the suspension 1) suspended in a right-left direction in a lower side of a vehicle and is swingable in a vertical direction on a rear side (arrow side in the drawing) of the suspension member 3.

A coil spring 5 is installed on an upper surface 2a of the arm 2 via the weight measuring device for a vehicle 100 of the present embodiment. The coil spring 5 is interposed between the arm 2 and a lower surface of the vehicle body.

Further, the suspension 1 illustrated in Fig. 5 has a configuration of a well-known trailing-arm-type suspension 1 except that the weight measuring device for a vehicle 100 of the present embodiment is installed. The suspension 1 illustrated in Fig. 5 is not to be construed as being limited particularly to the present embodiment and can be changed in design within the scope of the invention.

Hereinafter, the weight measuring device for a vehicle 100, which is a characteristic part of the invention, will be described and the description of the other suspension configurations will be omitted.

The weight measuring device for a vehicle 100 is constituted of a bottom plate 200 which is installed in a state where a lower surface side thereof abuts on the arm 2 of the suspension 1, a collar 220 which is provided on an upper surface of the bottom plate 200, a diaphragm 230 which is fixed so as to be interposed between the bottom plate 200 and the collar 220, a piston 300 (movable body) capable of pressing the diaphragm 230 in the vertical direction (axial direction indicated by an arrow V in the drawing), a pad 310 (movable body) disposed between the piston 300 and the diaphragm 230, a spring seat 340 (movable body) which receives one end (lower end) of the coil spring 5 of the suspension 1, an oil chamber 201 which is formed between the bottom plate 200 and the diaphragm 230 and filled with a predetermined measurement fluid (hydraulic oil) R, a pressure sensor 400 which is provided on a lower surface 203 of the bottom plate 200 and capable of detecting a change in pressure of the measurement fluid R filled in the oil chamber 201, and a stopper ring 320 having a thin annular shape which is fixed to a lower end of an outer circumference of the piston 300 and covers a lower end of an outer circumference of the bottom plate 200 (see Figs. 1 to 6).

The bottom plate 200 is formed into a short cylindrical shape with an open top by the lower surface 203 having a circular plate shape and an annular wall portion 205 protruding in a cylindrical shape with a predetermined thickness from an outer circumferential end of the lower surface 203 toward an upper side in a vertical direction (axial direction) V and is installed in a state where the lower surface 203 abuts on the arm 2 of the suspension.

Further, in the bottom plate 200, an upper surface 204 having an annular shape which is recessed from an inner circumferential end of the annular wall portion 205 and capable of accommodating the collar 220 described below, a diaphragm accommodation recess portion 231 having an annular shape which is recessed by a predetermined depth from an inner diameter of the upper surface 204 and capable of accommodating the diaphragm 230 described below, and a groove portion 202 having a cylindrical shape which is recessed by a predetermined depth from an inner diameter of the diaphragm accommodation recess portion 231 and capable of constituting the oil chamber 201 described below together with the diaphragm 230 are respectively provided on the upper surface 204 side. That is, the pressure sensor 400 is attached to the bottom plate 200 and the bottom plate 200 constitutes a mounting portion which cooperates with the diaphragm 230 to form the oil chamber 201.

Further, in the present embodiment, on a boundary area outer surface 205a of the annular wall portion 205 with the lower surface 203, a stepped portion 207 is formed continuously in a circumferential direction except for a protruding portion 205b.

That is, in the boundary area outer surface 205a of the annular wall portion 205 with the lower surface 203, the stepped portion 207 is formed in a substantially C-ring shape in a plan view except for the protruding portion 205b.

The groove portion 202 open in a cylindrical shape is formed toward the upper surface 204 direction of the bottom plate 200 in the diaphragm accommodation recess portion 231 which is recessed in a cylindrical shape at the upper surface 204 of the bottom plate 200.

The diaphragm accommodation recess portion 231 is provided with an inner surface portion 232 formed in an annular shape with a predetermined width on an outer diameter side of the groove portion 202.

Further, in the bottom plate 200, a plurality of bolt through holes 210a through which connecting bolts (flat head bolts) 210 for fixing the collar 220 described below are passed are provided at predetermined intervals in the circumferential direction.

On the lower surface 203 facing the arm 2 side of the bottom plate 200, a sensor connection portion 206 capable of connecting the pressure sensor 400 is formed such that the sensor connection portion 206 integrally extends vertically downward with a predetermined length.

The sensor connection portion 206 is constituted of a cylindrical portion 200b which connects the pressure sensor 400 by passing through the bottom plate 200 in the vertical direction (axial direction) V from a lower surface 206a thereof to the groove portion 202, and a non-cylindrical portion 200a which is formed by a part of the cylindrical portion 200b protruding outwardly. In the present embodiment, the non-cylindrical portion 200a has a protruding height similar to that of the lower surface (the lower surface of the sensor connection portion 206) 206a of the cylindrical portion 200b and is formed in a rectangular parallelepiped shape protruding outwardly integrally with the outer circumferential surface (outer circumferential surface of the sensor connection portion 206) 206b of the cylindrical portion 200b.

The pressure sensor 400 capable of detecting a change in pressure of the measurement fluid R filled in the oil chamber 201 and, for example, measures the pressure, converts it into a voltage signal and transmits the signal, and includes a sensor main body portion 404 having a columnar shape, an abutting flange surface portion 403 which is integrally provided on an end surface of the sensor main body portion 404, a detection unit 401 which is integrally provided on an end surface of the abutting flange surface portion 403, and a tip end detection surface 402 which is provided on a tip end side of the detection unit 401.

Further, those having a well-known structure are appropriately selected and used within the scope of the invention as a pressure sensor assumed in the present invention and it is not construed as being particularly limited, and further, the optimum one can be selected appropriately within the scope of the invention.

In the present embodiment, in the pressure sensor 400, the detection unit 401 is inserted into a screw hole 200d of the cylindrical portion 200b of the sensor connection portion 206 and the tip end detection surface 402 faces the inside of the oil chamber 201, and further, the pressure sensor 400 is erected by being screwed in the vertical direction (axial direction) V until the abutting flange surface portion 403 is brought into close contact with an opening edge 206c of the sensor connection portion 206.

Further, in the pressure sensor 400, the sensor main body portion 404 extends downward in the vertical direction (axial direction) continuously integrally with the detection unit 401 and a wire 405 for transmitting the electric signal converted by the pressure sensor 400 to a display device on a vehicle body side is connected to a lower end 404a of the sensor main body portion.

Further, it is necessary for the connection between the sensor connection portion 206 and the pressure sensor 400 to be performed so as not to allow the measurement fluid R to leak.

In the present embodiment, the fixing is made via a rubber washer 410 between the abutting flange surface portion 403 and the opening edge 206c of the sensor connection portion 206.

Further, the pressure sensor 400 is not necessarily arranged at the center of the lower surface 203 of the bottom plate 200 and it is possible to install the pressure sensor 400 by disposing the sensor connection portion 206 at an arbitrary position of the lower surface 203 of the bottom plate 200 as long as the tip end detection surface 402 faces the inside of the oil chamber 201, and further, the pressure sensor 400 can be installed by selecting a position where the attachment on the vehicle body (arm 2) side is not hindered.

Additionally, the lower surface 203 side of the bottom plate 200 abuts on the upper surface 2a of the arm 2 of the suspension 1, and thus a rubber sheet 250 is interposed so as to make it easy for the abutting surfaces to come into contact with each other.

Further, the bottom plate 200 has an anti-rotation mechanism with respect to the arm 2 of the suspension 1.

In the present embodiment, the anti-rotation mechanism is constituted of a non-cylindrical portion 200a of the sensor connection portion 206 and an angular hole portion 2d of a hole portion 2b which is formed at a position 2e (assembling position) of the upper surface 2a of the arm 2 of the suspension 1 where the weight measuring device 100 is assembled and passes through the arm 2 from the upper surface 2a to the lower surface.

The hole portion 2b of the arm 2 of the suspension 1 is constituted of a circular hole portion 2c which has a slightly larger shape than the cylindrical portion 200b of the sensor connection portion 206 of the bottom plate 200 and the angular hole portion 2d which is integrally continuous with the circular hole portion 2 c and has a slightly larger shape than the non-cylindrical portion 200a, and thus the hole portion 2b is formed in a keyhole shape.

Further, when the weight measuring device 100 is assembled to the arm 2 of the suspension 1, the lower surface 203 of the bottom plate 200 abuts on the assembling position 2e of the upper surface 2a of the arm 2 of the suspension 1 via the rubber sheet 250 by inserting the cylindrical portion 200b of the sensor connection portion 206 of the bottom plate 200 into the circular hole portion 2c of the hole portion 2b of the arm 2 and inserting the non-cylindrical portion 200a (rectangular parallelepiped shape) of the sensor connection portion 206 into the angular hole portion 2d of the hole portion 2b of the arm 2, so that the assembly is completed.

In this case, the non-cylindrical portion 200a of the sensor connection portion 206 fits into the angular hole portion 2d of the hole portion 2b of the arm 2, and thus relative rotation of the arm 2 and the bottom plate 200 in the circumferential direction is prevented.

Further, the pressure sensor 400 is inserted through the hole portion 2b of the arm 2 and faces the lower side of arm 2, and thus the wire 405 connected to the pressure sensor 400 also passes through the lower side of the arm 2 and extends to the display device on the vehicle body side. In this case, the rotation of the pressure sensor 400 is prevented by the fitting of the non-cylindrical portion 200a and the angular hole portion 2d of the hole portion 2b of the arm 2, and thus there is no wire disconnection caused by twisting.

Further, since the assembly is performed only by inserting the non-cylindrical portion 200a and the cylindrical portion 200b of the sensor connection portion 206 of the bottom plate 200 into the hole portion 2b of the arm 2 of the suspension 1, it is possible to easily assemble the device to the vehicle compared with a case where the device is assembled to the arm 2 of the suspension 1 by a fastening and fixing means such as a screw.

In the present embodiment, the configuration using the non-cylindrical portion 200a of the sensor connection portion 206 and the angular hole portion 2d of the arm 2 of the suspension 1 is described as an example of the anti-rotation mechanism. However, the specific shapes of the non-cylindrical portion 200a and the angular hole portion 2d are not to be construed as being limited thereto and any shapes may be adopted as long as the relative rotation is prevented by inserting the non-cylindrical portion 200a into the angular hole portion 2d. Even when, for example, the non-cylindrical portion 200a is formed by making a part of the cylindrical portion 200b of the sensor connection portion 206 recessed in a radial direction and, in contrast with the non-cylindrical portion 200a, the angular hole portion 2d is formed in an angular protrusion portion formed in a convex shape which fits into the recessed non-cylindrical portion 200a, it is within the scope of the invention. Further, the non-cylindrical portion 200a does not necessarily have to be in an angular shape and may have another shape. Also, in the present embodiment, the sensor connection portion 206 is constituted of the cylindrical portion 200b and the non-cylindrical portion 200a. However, even a case where the sensor connection portion 206 itself may be formed into a predetermined angular shape or elliptical shape, that is, it may be formed in a non-cylindrical shape is possible within the scope of the present invention while appropriately changing the design.

Still further, even a case where a plurality of non-cylindrical portions 200a are provided is possible within the scope of the present invention while appropriately changing the design. In this case, it is preferable that there are a plurality of angular hole portions 2d of the hole portion 2b of the arm 2 of the suspension 1 formed according to the number of the non-cylindrical portions 200a.

The diaphragm 230 is formed in a short columnar shape (circular plate shape) covering an opening region 202a of the groove portion 202 and forming the oil chamber 201 having a predetermined space together with the groove portion 202. The diaphragm 230 is fitted into the diaphragm accommodation recess portion 231 which is formed in an annular shape at the upper surface 204 of the bottom plate 200.

In the present embodiment, the diaphragm 230 is constituted such that a sealing region 233 interposed between the bottom plate 200 and the collar 220 is formed on an outer diameter side and a pressing region 234 configured to be integrally deformable on an inner diameter side of the sealing region 233 is provided.

The pressing region 234 has a width to the extent that the pressing region 234 covers the opening region 202a of the groove portion 202 and the oil chamber 201 is formed in a predetermined area by the pressing region 234 and the groove portion 202 of the bottom plate 200.

The material of the diaphragm 230 may be any material having flexibility and durability (cold resistance, abrasion resistance, oil resistance). Although the material is not particularly limited, a material suitable for the fluid properties such as nitrile rubber, Teflon (registered trademark), chloroprene rubber, fluorine rubber, and ethylene propylene rubber is selected. Further, the diaphragm may be a metal diaphragm made of thin stainless steel or the like, which is within the scope of the invention.

The predetermined measurement fluid R is fully filled and sealed in the oil chamber 201 without generating air bubbles. The diaphragm 230 is pressed against the groove portion 202 by the movement of the piston 300, and therefore the measurement fluid R is capable of changing the pressure applied to the tip end detection surface 402 of the pressure sensor 400 which faces the inner side of the oil chamber 201.

In the present embodiment, the collar 220 is formed in a predetermined short columnar shape formed to have a thickness in the vertical direction (axial direction) V to the extent that the collar 220 fits within an area (upper surface 204 of an annular shape) surrounded by the annular wall portion 205 of the bottom plate 200 and the collar 220 is formed in a size where the collar 220 has an outer diameter where the collar 220 can be fitted into an inner circumferential surface of the annular wall portion 205 of the bottom plate 200 and an inner diameter by an annular inner surface portion 221 located further on an inner side than the inner surface portion 232 of the diaphragm accommodation recess portion 231.

On an outer circumferential side of a lower surface 222 of the collar 220, a plurality of bolt fixing holes 224 are provided in the circumferential direction at the same interval as the bolt through holes 210a of the bottom plate 200 such that the bolt fixing holes 224 are coaxially arranged in the vertical direction (axial direction) V with the bolt through holes 210a of the bottom plate 200.

The collar 220 is integrally fixed to the bottom plate 200 by communicating the bolt through holes 210a of the bottom plate 200 with the bolt fixing holes 224 of the collar 220, inserting the connecting bolts (flat head bolts) 210 from the bottom surface 203 side of the bottom plate 200, and tightening the connecting bolts 210.

In the present embodiment, the sealing region 233 of the diaphragm 230 is fixed in a sealing manner in a state where the sealing region 233 is interposed between the lower surface 222 of the collar 220 and the diaphragm accommodation recess portion 231.

In the present embodiment, a predetermined sealing member, for example, is provided as described below to improve the sealing effect.

First, a first sealing groove 251a having an annular shape is provided in the inner surface portion 232 of the diaphragm accommodation recess portion 231 and a first O-ring 250a is inserted thereto, and further, the first O-ring 250a is compressed against a lower surface portion 233a of the sealing region 233, in such a manner that sealing is performed.

Next, a second sealing groove 251b having an annular shape is provided in the lower surface 222 of the collar 220 and a second O-ring 250b is inserted thereto, and further, the second O-ring 250b is compressed against an upper surface portion 233b of the sealing region 233, in such a manner that sealing is performed.

Further, a third sealing groove 251c which has a larger diameter than that of the second sealing groove 251b and has an annular shape is provided in the lower surface 222 of the collar 220 and a third O-ring 250c is inserted thereto, and further, the third O-ring 250c is compressed against the upper surface portion 233b of the sealing region 233, in such a manner that sealing is performed.

Since the sealing is performed by the first O-ring 250a compressed against the lower surface portion 233a of the sealing region 233, leakage of the measurement fluid R from the oil chamber 201 can be sufficiently prevented. However, according to the present embodiment, several sealing structures are adopted as described above.

That is, the sealing is performed by the second O-ring 250b compressed against the upper surface portion 233b of the sealing region 233 and, on an outer diameter side which is located further on the outer diameter side than the second O-ring 250b, the sealing is performed by the third O-ring 250c compressed between the lower surface 222 of the collar 220 and the upper surface 204 of the bottom plate 200.

Therefore, since, in addition to the first O-ring 250a disposed closest to the oil chamber 201, the second O-ring 250b and the third O-ring 250c are arranged on the outer side thereof, the sealing reliability becomes extremely high. Further, in the present embodiment, since the sealing structures are provided in a region where there is no relative movement as described above, the sealing durability is also high.

In addition, when a sealing structure where the sealing region 233 of the diaphragm 230 is formed to be thicker than the diaphragm accommodation recess portion 231 and the thick sealing region 233 has a thickness where the sealing region 233 can perform sealing by being compressed when the sealing region 233 is interposed between the bottom plate 200 and the collar 220 is provided, the sealing reliability can be further enhanced.

Each sealing member may be constituted such that sealing is performed by providing a sealing groove (251a, 251b, 251c) in one member constituting a seal fixing region and an abutment region, inserting an O-ring (250a, 250b, 250c) into the sealing groove (251a, 251b, 251c), and compressing the O-ring (250a, 250b, 250c) against the other member. There is no limitation as to which the sealing groove and the O-ring are provided to and any of them is within the scope of the invention.

In the present embodiment, the piston 300 (movable body) is constituted of a cylindrical portion 301 which has an outer diameter in sliding contact with the annular inner surface portion 221 (inner diameter of the collar 220) of the collar 220, a flange portion 302 which is integrally formed continuously from the outer diameter of the cylindrical portion 301 in a horizontal direction and provided to have a diameter greater than the outer diameter of the collar 220, an annular portion 303 which is integrally extends downward in the vertical direction from the inner diameter of the flange portion 302, and a suspended peripheral edge portion 304 which is formed integrally from the outer circumferential portion of the flange portion 302 and extends downward slightly over the stepped portion 207 of the bottom plate 200.

A lower groove portion 301c open in a cylindrical shape is formed on a lower surface 301a side of the cylindrical portion 301 and a spring seat fitting cylinder portion 301d of a cylindrical shape which protrudes upward and has an open top surface is formed on an upper surface 301b side of the cylindrical portion 301.

On a lower surface 304a of the suspended peripheral edge portion 304, screw fixing holes 305 for fastening and fixing fastening screws 330 for fixing a stopper ring 320 described below are provided at predetermined intervals in the circumferential direction.

Further, a protruding portion 300a having a rectangular shape which protrudes integrally downward in the vertical direction (axial direction) V is formed in a part of the lower surface 304a of the suspended peripheral edge portion 304 in the circumferential direction. The circumferential width of the protruding portion 300a is set to the same circumferential width as the protruding portion 205b of the bottom plate 200.

The pad 310 (movable body) which covers an opening region of the lower groove portion 301c and is formed in a cylindrical shape thicker than the vertical (axial) depth of the lower groove portion 301c is fitted and adhered to the lower groove portion 301c of the piston 300.

Although it is not construed as being particularly limited, it is preferable that the pad 310 be made of a hard synthetic resin material excellent in self-lubricating properties, for example, a polyacetal resin such as Delrin (registered trademark) because the pad 310 slides between the diaphragm 230 and the piston 300. Further, a lubricant may be filled in a groove provided on the upper surface of the pad 310 to lubricate the sliding surfaces between the pad 310 and the diaphragm 230. Even when the piston 300 directly abuts on the diaphragm 230 without the pad 310, it is also within the scope of the invention.

Predetermined gaps P are set between the lower surface 301a of the cylindrical portion 301 of the piston 300 and the diaphragm 230 and between the lower surface of the flange portion 302 of the piston 300 and an upper surface 223 of the collar 220.

It is necessary for the predetermined gap P to be set to a gap greater than a distance by which the piston 300 is supposed to move back and forth in a longitudinal direction (vertical direction indicated by a reference character V in the drawing) of the suspension due to the deformation of the diaphragm 230 or the like when the weight measuring device 100 receives an assumed rated load. In a case of a gap smaller than the distance by which the piston 300 is supposed to move back and forth, the gap P is removed during the measurement of the weight of the vehicle and the advancing and retracting of the piston 300 is restricted, and thus the accurate weight measurement is hindered.

Therefore, the pad 310 is set to be thicker than the vertical (axial) depth of the lower groove portion 301c, so that it protrudes from the lower groove portion 301c and is fitted so as to abut on the diaphragm 230. As a result, the pad 310 presses the diaphragm 230 in accordance with the advancing and retracting of the piston 300.

The stopper ring 320 is formed in a thin annular shape having an outer diameter similar to that of the suspended peripheral edge portion 304 of the piston 300 and an inner diameter covering the stepped portion 207 of the bottom plate 200 and the stopper ring 320 has a notch portion 322 in a part in the circumferential direction thereof. That is, the stopper ring 320 is formed in a substantially C-ring shape in a plan view (see Fig. 1).

Additionally, the horizontal width of the notch portion 322 is set to be such that both the protruding portion 205b (a portion where the stepped portion 207 is not formed) of the bottom plate 200 and the protruding portion 300a of the suspended peripheral edge portion 304 of the piston 300 can be fitted in parallel in the horizontal direction.

Further, the radial width of the notch portion 322 may be set to the extent where a slight gap is provided with respect to the protruding portion 205b of the bottom plate 200 and the protruding portion 205b can move back and forth.

Furthermore, the stopper ring 320 is provided with a plurality of screw through holes 321 in the circumferential direction at the same interval as the screw fixing holes 305 such that the screw through holes 321 are disposed coaxially with the screw fixing holes 305 of the suspended peripheral edge portion 304 of the piston 300 in the vertical direction (axial direction) V.

When the stopper ring 320 is installed, first, the bottom plate 200 and the piston 300 are arranged such that the protruding portion 205b (a portion where the stepped portion 207 is not formed) of the bottom plate 200 and the protruding portion 300a of a rectangular shape which is formed in the lower surface 304a of the suspended peripheral edge portion 304 of the piston 300 are aligned continuously in the radial direction, and then the stopper ring 320 is set such that the protruding portion 205b and the protruding portion 300a are fitted into the notch portion 322. In this case, an outer diameter 205c of the annular wall portion 205 of the bottom plate 200 and an inner diameter 304b of the suspended peripheral edge portion 304 of the piston 300 face each other via a slight gap (see Fig. 1).

Next, the stopper ring 320 allows the screw through hole 321 and the screw fixing hole 305 of the suspended peripheral edge portion 304 of the piston 300 to communicate with each other and allows the fastening screw 330 to be inserted and fastened from a lower side 320a of the stopper ring 320, so that the stopper ring 320 is fastened to the lower surface 304a of the suspended peripheral edge portion 304 of the piston 300.

In this case, since the stopper ring 320 has the outer diameter similar to that of the suspended peripheral edge portion 304 of the piston 300 and the inner diameter covering the stepped portion 207 of the bottom plate 200, the vertically downward movement (movement in a direction to disassemble the piston 300 and the bottom plate 200) of the stepped portion 207 of the bottom plate 200 is regulated by the stopper ring 320 when the stopper ring 320 is fastened and fixed to the suspended peripheral edge portion 304 of the piston 300. Therefore, even before the weight measuring device 100 is installed in the vehicle (in a case where the extension force of the coil spring is not loaded in the axial direction), there is no worry that the device is disassembled into a member integrated with the bottom plate 200 and a member integrated with the piston 300, and thus it became easier to handle the weight measuring device 100 also during its transportation or the like.

Further, since the piston 300 and the stopper ring 320 are fastened and fixed by the fastening screw 330 and the protruding portion 205b of the bottom plate 200 is fitted into the notch portion 322 of the stopper ring 320 such that the rotation in the circumferential direction is restricted and it is possible to move back and forth in the advancing and retracting direction of the piston 300, the relative rotation between the piston 300 and the bottom plate 200 is prevented.

Therefore, it is possible to suppress the wear of the diaphragm 230 and the piston 300 (pad 310), and further, the relative rotation of the coil spring can also be prevented, and thus it is possible to maintain the accuracy of the load detection of the weight measuring device 100.

In the present embodiment, the pressure in the oil chamber 201 of the weight measuring device 100 assembled as described above is controlled so as to be constant.

Specifically, in an operation of installing the pressure sensor 400 to the bottom plate 200, first, the detection unit 401 of the pressure sensor 400 is inserted into the screw hole 200d of the cylindrical portion 200b of the sensor connection portion 206 in a state where a load is not applied to the weight measuring device 100 and the pressure sensor 400 is screwed in the vertical direction (axial direction) V until the abutting flange surface portion 403 is brought into close contact with the opening edge 206c of the sensor connection portion 206.

In this case, since the pressure sensor 400 enters until the tip end detection surface 402 of the pressure sensor 400 faces the inner side of the oil chamber 201, the measurement fluid (hydraulic oil) R pushed by the pressure sensor 400 becomes excessive with respect to the volume of the oil chamber 201, and thus the measurement fluid (hydraulic oil) R is discharged from the oil discharge hole portion 240.

When the discharge of the measurement fluid (hydraulic oil) R is finished, the oil discharge hole portion 240 is completely sealed by a sealing portion 242 formed by welding an opening 240a of the oil discharge hole portion 240 without applying a load. As a result, the pressure in (inside) the oil chamber 201 is managed in a state of being equilibrated with the atmospheric pressure.

The oil discharge hole portion 240 extends vertically downward from the oil chamber 201, and thus the oil chamber 201 and a lower surface 200c of the non-cylindrical portion 200a of the bottom plate 200 are linearly communicated with each other and the opening 240a open to the lower surface 200c is formed.

Additionally, the oil discharge hole portion 240 is formed as a pore to the extent where the measurement fluid (hydraulic oil) R can pass therethrough, that is, a so-called pinhole of a circular cross-section shape with an extremely small diameter.

Further, in the present embodiment, the oil discharge hole portion 240 is formed in a circular cross-section shape. However, it is not to be construed as being limited thereto and the cross-section shape of the oil discharge hole portion 240 is arbitrary. For example, it may be formed in a hole portion or the opening 240a having a rectangular cross-section shape.

In the present embodiment, a groove portion 241 of a short cylindrical shape is recessed in the lower surface 200c of the non-cylindrical portion 200a and the opening 240a of the oil discharge hole portion 240 passing through the bottom plate 200 is formed in a bottom surface portion of the groove portion 241.

The sealing portion 242 is formed by welding the opening 240a with a metallic material.

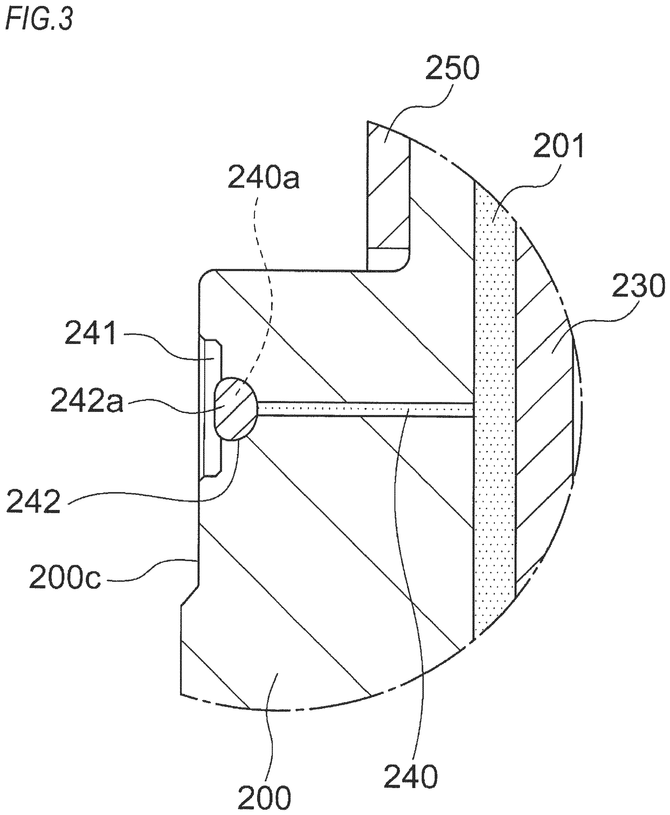

Specifically, the metal (bottom surface portion of the groove portion 241) around the opening 240a is melted and solidified by welding, whereby the opening 240a and the surroundings thereof merge together as a lump and it forms the sealing portion 242 which blocks the opening with the opening 240a. In this case, a protruding portion 242a protruding in a knob shape from the bottom surface of the groove portion 241 toward the inside of the groove portion 241 is formed (see Fig. 3). However, the protruding portion 242a is designed so as not to protrude outside from the groove portion 241.

The groove diameter of the groove portion 241 may be set to be able to accommodate the protruding portion 242a of the sealing portion 242 formed by welding the opening 240a of the oil discharge hole portion 240. In the present embodiment, the groove diameter is set to, for example, about twice the diameter of the protruding portion 242a.

By accommodating the protruding portion 242a in the groove portion 241 provided around the opening 240a, the protruding portion 242a is protected and the sealing performance can be secured over a long period of time.

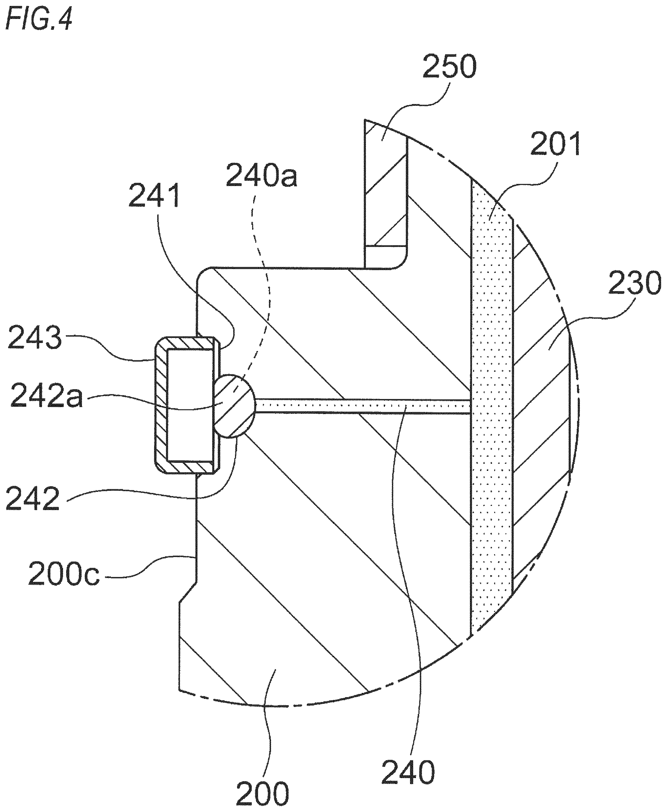

In order to further enhance the sealing performance, a cap 243 may be put on the groove portion 241 (see Fig. 4).

In this case, the cap 243 is formed in a cylindrical shape having an outer diameter capable of being fitted into the groove diameter of the groove portion 241 and is open to the bottom surface side so as to be able to accommodate the protruding portion 242a. The protruding portion 242a is covered and protected by the cap 243 by fitting the cap 243 toward the protruding portion 242a into the groove portion 241. Therefore, since the sealing portion 242 is separated from the outside, the sealing performance of the sealing portion 242 is maintained robustly over a long period of time.

In addition, fitting between the cap 243 and the groove portion 241 may be performed by a screwing manner.

In the present embodiment, since, as described above, the oil discharge hole portion 240 through which the measurement fluid (hydraulic oil) R which becomes excessive due to the attachment of the pressure sensor 400 is discharged is provided and the oil discharge hole portion 240 is completely sealed by the sealing portion 242 without applying a load, the pressure in (inside) the oil chamber 201 under no load condition is managed so as to be equilibrated with the atmospheric pressure.

Also, since the groove portion 241 for protecting the sealing portion 242 is provided, the sealing performance of the sealing portion 242 is ensured over a long period of time. Further, since the cap 243 capable of being fitted into the groove portion 241 is provided, the sealing portion 242 is further strongly protected. Thus, even when it is placed in an environment exposed to rainwater, mud, of the like due to travelling of the vehicle for a long period of time, the sealability of the sealing portion 242 is not reduced.

Further, it is also possible to adopt a configuration in which a rising wall portion is provided in an opening region of the groove portion 241 and a cylindrical cap is screwed onto the outer periphery of the rising wall portion and optimum sealing means can be appropriately adopted within the scope of the invention.

Although the oil discharge hole portion 240 according to the present embodiment is formed in a pinhole shape having a small diameter, it has a diameter sufficient for the excessive measurement fluid (hydraulic oil) R to exude and equilibrate the pressure in (inside) the oil chamber 201 and the atmospheric pressure (outside). Also, since the hole diameter of the oil discharge hole portion 240 is small, it is easy to achieve sealing by welding.

Further, the measurement fluid (hydraulic oil) R moves slowly in the oil discharge hole portion 240 having a small hole diameter when the viscosity coefficient of the measurement fluid (hydraulic oil) R is sufficiently large, and thus it is easy to prevent the measurement fluid (hydraulic oil) R from leaking to the outside from an opening 230a (atmosphere side) of the oil discharge hole portion 240 and to prevent air bubbles (atmosphere) from entering the oil chamber 201 (inside) through the oil discharge hole portion 240 during the welding operation (blocking operation of the oil discharge hole portion 240).

Additionally, in the present embodiment, the opening 240a of the oil discharge hole portion 240 is provided in the lower surface 200c of the non-cylindrical portion 200a, and however, the oil discharge hole portion 240 may be provided at other position as long as the oil chamber 201 communicates with the atmosphere side.

That is, the oil discharge hole portion 240 may be provided so as to communicate the oil chamber 201 (inside) with the cylindrical portion 200b of the sensor connection portion 206 or may be provided so as to communicate the oil chamber 201 with a side surface of the non-cylindrical portion 200a. Alternatively, it may be provided so as to communicate the oil chamber 201 (inside) with a region other than the sensor connection portion 206 of the bottom plate 200.

Although it is preferable that the oil discharge hole portion 240 be formed in a linear shape, it is not necessarily to have a linear shape. For example, it may have a bent shape, a curved shape, or the like. Even in that case, it is preferable that the oil discharge hole portion 240 be formed as a pore (so-called pinhole having an extremely small diameter) capable of allowing the measurement fluid (hydraulic oil) R to pass therethrough.

Additionally, in the present embodiment, the sealing portion 242 is provided at the opening 240a of the oil discharge hole portion 240, and however, the sealing portion 242 may be provided anywhere in the oil discharge hole portion 240 as long as the oil discharge hole portion 240 is sealed. For example, it may be provided in the middle of the pore of the oil discharge hole portion 240 or provided on the oil chamber 201 side.

Further, in the present embodiment, the sealing portion 242 is formed by welding the oil discharge hole portion 240, and however, it is not to be construed as being limited thereto and other methods may be used as long as the oil discharge hole portion 240 is reliably sealed over a long period of time.

The spring seat 340 (movable body) is constituted of a large diameter cylindrical portion 342 including a through hole 341 of a cylindrical shape in which the spring seat fitting cylinder portion 301d of the cylindrical portion 301 of the piston 300 can be installed and a flange portion 343 which is integrally provided continuously from the lower end of the large diameter cylindrical portion 342 toward the outside in the horizontal direction. An upper surface and a lower surface of the large diameter cylindrical portion 342 are formed to be open.

One end (lower end) 5a of the coil spring 5 constituting the suspension 1 abuts on an upper surface of the flange portion 343 in the vertical direction (axial direction) V (see Figs. 1 and 5).

Additionally, in the present embodiment, an example of applying the weight measuring device for a vehicle 100 to a suspension of a trailing arm type is described, and however, the invention can be applied to other types of a suspension as long as the coil spring 5 is individually interposed between the arm of the suspension 1 and the lower surface of the vehicle body. The invention may be applied to a suspension of, for example, a semi-trailing arm type or a torsion beam type.

### Second Embodiment

Figs. 6 to 8 illustrate a second embodiment of the invention and this embodiment illustrates an example of application to a suspension for a front wheel of an automobile.

A weight measuring device for a vehicle 100 according to the present embodiment is constituted of a mounting portion (top plate) 500 which is fixed to the vehicle side, a diaphragm 520 which is fixed so as to be interposed between an inner collar 700 and an outer collar 720 both of which are provided on a lower surface 500b of the mounting portion 500, and the mounting portion 500, a piston 760 (movable body) which abuts on the diaphragm 520 and can press the diaphragm 520 in the vertical direction (axial direction indicated by the arrow V in the drawings), a bushing 780 (movable body) for receiving one end (upper end) of a coil spring (not illustrated) of the suspension, a bearing device 900 (movable body) which is interposed between the piston 760 and the bushing 780, an oil chamber 510 which is formed between the mounting portion 500 and the diaphragm 520 and filled with the predetermined measurement fluid (hydraulic oil) R, and a pressure sensor 600 which is provided on an upper surface 500a of the mounting portion 500 and can detect a change in pressure of the measurement fluid R filled in the oil chamber 510 (see Figs 6 to 8).

The mounting portion (top plate) 500 is formed in a short cylindrical shape having a predetermined thickness, is fixed to the vehicle side at its upper surface 500a side and is provided with a groove portion 512 opening in an annular shape at its lower surface 500b side, and further, an annular wall portion 501 protrudes in a thin cylindrical shape downward from the outer peripheral end in the vertical direction (axial direction) V.

In a diaphragm accommodation recess portion 530 which is annularly recessed at the lower surface 500b of the mounting portion 500, the groove portion 512 is formed in a dome shape in a cross-sectional view toward the upper surface 500a of the mounting portion 500.

The diaphragm accommodation recess portion 530 includes an inner surface portion 531 which is annularly formed with a predetermined width on an inner diameter side of the groove portion 512 and an outer surface portion 532 which is annularly formed with a predetermined width on an outer diameter side of the groove portion 512.

A sensor connection portion 502 capable of connecting the pressure sensor 600 is formed on the upper surface 500a of the mounting portion 500 facing the vehicle body side.

Further, a communication path 510a communicating with the groove portion 512 at one or more positions is provided in the mounting portion 500 toward the sensor connection portion 502.

In the sensor connection portion 502, an insertion portion 504 of a cylindrical shape for receiving a detection unit 601 of a cylindrical shape provided at the tip end of the pressure sensor 600 is recessed from the upper surface to the inner side as a threaded portion and an insertion port 503 protrudes upward in a cylindrical shape in the vertical direction (axial direction) V and is open. Further, a fluid reservoir 511 communicating with the communication path 510a is formed in a bottom surface area of the insertion portion 504.

It is necessary for the connection between the sensor connection portion 502 and the pressure sensor 600 to be performed so that measurement fluid R does not leak out.

On the mounting portion 500, a plurality of bolt insertion holes 505 through which bolts 540 are inserted are provided for fastening and fixing the device to a main frame (for example, a cross member) of the automobile and a plurality of bolt fixing holes 506 in which the connecting bolts 550 for fixing a stopper portion 790 described below are fastened are provided.

Further, a fitting hole portion 507 for fitting a cylindrical protruding portion 712 of the inner collar 700 is recessed in a central region of the lower surface 500b of the mounting portion 500.

The pressure sensor 600 is capable of detecting a change in pressure of the measurement fluid R filled in the oil chamber 510. For example, a sensor having a well-known structure which measures a pressure, converts it into a voltage signal, and transmits the signal is appropriately selected and used within the scope of the invention. It is not construed as being particularly limited and the optimum one can be selected appropriately within the scope of the invention.

In the present embodiment, the pressure sensor 600 is erected in the vertical direction (axial direction) V in a state where the detection unit 601 is inserted into the sensor connection portion 502 and a tip end detection surface 602 faces the inner side of the oil chamber 510, and further, an abutting flange surface portion 603 is brought into close contact with the opening edge of the sensor connection portion 502.

In the present embodiment, the abutting flange surface portion 603 and the opening edge portion are fixed with a washer 604 interposed therebetween. Further, in order to prevent leakage of the measurement fluid, a predetermined sealing device, in this embodiment, an O-ring 606 is disposed.

Additionally, the pressure sensor 600 is not necessarily arranged at the center of the upper surface 500a of the mounting portion 500, and it is possible to arrange the sensor connection portion 502 at an arbitrary position of the upper surface 500a of the mounting portion 500, and thus, it is possible to arrange by selecting a position where the attachment on the vehicle body side is not hindered.

The diaphragm 520 covers an opening region 513 of the groove portion 512 and is formed in an annular shape which forms the oil chamber 510 in a predetermined space together with the groove portion 512 and fitted into the diaphragm accommodation recess portion 530 formed in an annular shape at the lower surface 500b of the mounting portion 500.

In the present embodiment, the diaphragm 520 is provided with a first sealing region 560 and a second sealing region 570 having a large thickness and formed annularly on the inner diameter side and the outer diameter side respectively and an annular pressing region 580 which is configured to be deformable by being connected thinly between the first sealing region 560 and the second sealing region 570 is provided.

The pressing region 580 is constituted to have a width where it covers the opening region 513 of the groove portion 512 and the oil chamber 510 of a predetermined area is formed by the pressing region 580 and the groove portion 512 of the mounting portion 500 (including the communication path 510a and the fluid reservoir 511).

The first sealing region 560 and the second sealing region 570 are formed to be thicker than the vertical (axial) depth of the diaphragm accommodation recess portion 530 and have a thickness where the first sealing region 560 and the second sealing region 570 are compressed and capable of performing sealing when those are pinched by the inner collar 700 and the outer collar 720.

The material of the diaphragm 520 may be any material having flexibility and durability (cold resistance, abrasion resistance, oil resistance). Although the material is not particularly limited, a material suitable for the fluid properties such as nitrile rubber, Teflon (registered trademark), chloroprene rubber, fluorine rubber, and ethylene propylene rubber is selected.

Further, the diaphragm may be a metal diaphragm made of thin stainless steel or the like, which is also within the scope of the invention.

The predetermined measurement fluid R is fully filled and sealed in the oil chamber 510 without generating air bubbles. The pressure applied to the measurement fluid R can be changed by the movement of the piston 760.

In the present embodiment, the inner collar 700 is constituted to have a body portion 710 which is formed in a predetermined short cylindrical shape and formed to have a thickness in the vertical direction (axial direction) V to the extent where it is accommodated within the area surrounded by the annular wall portion 501 of the mounting portion 500 and a cylindrical protruding portion 712 which is erected in a small cylindrical shape at the center of the upper surface of the body portion 710.

The cylindrical protruding portion 712 has an outer diameter where the cylindrical protruding portion 712 can fit into the fitting hole portion 507 recessed in the center of the lower surface 500b of the mounting portion 500, and an accommodation hole portion 713 capable of accommodating a tip end of a rod (not illustrated) of a shock absorber (not illustrated) constituting the suspension and a nut (not illustrated) fixed to the tip end of the rod is formed so as to passing through the cylindrical protruding portion 712.

The body portion 710 is formed to have a size where the body portion 710 faces the inner surface portion 531 of the diaphragm accommodation recess portion 530 when the body portion 710 is disposed by fitting the cylindrical protruding portion 712 into the fitting hole portion 507 of the mounting portion 500.

The first sealing region 560 of the diaphragm 520 is sealingly fixed by being interposed between an upper surface 711 of the body portion 710 and a surface portion (inner surface portion 531 of the diaphragm accommodation recess portion 530) located further on the inner side than the opening region 513 in the lower surface 500b of the mounting portion 500.

In the present embodiment, the outer collar 720 is constituted to have a body portion 721 which is formed in a predetermined short cylindrical shape and formed to have a thickness in the vertical direction (axial direction) V to the extent where it fits within an area surrounded by the annular wall portion 501 of the mounting portion 500, an insertion hole 723 which is provided at the center of the body portion 721, and a cylindrical vertical portion 724 which vertically extends in a cylindrical shape from the lower surface of the body portion 721 at a position slightly deviated from the insertion hole 723 in a radially outward direction.

The body portion 721 is formed in the size having an outer diameter where the body portion 721 can be fitted into the inner circumferential surface of the annular wall portion 501 of the mounting portion 500 and an inner diameter where the body portion 721 faces the outer surface portion 532 of the diaphragm accommodation recess portion 530.

The second sealing region 570 of the diaphragm 520 is sealingly fixed by being interposed between an upper surface 722 of the body portion 721 and a surface portion (outer surface portion 532 of the diaphragm accommodation recess portion 530) located further on the outer side than the opening region 513 in the lower surface 500b of the mounting portion 500.

Further, in the present embodiment, bolt insertion holes (large diameter) 725 of which the number is the same as that the bolt insertion holes 505 provided in the mounting portion 500 and which have the same diameter as the bolt insertion holes 505 are provided coaxially with the bolt insertion hole 505 in the vertical direction (axial direction) V and bolt insertion holes (small diameter) 726 of which the number is the same as that of the bolt fixing holes 506 for fastening and fixing the stopper portion 790 are provided coaxially with the bolt fixing holes 506.

The cylindrical vertical portion 724 is formed to have a vertical (axial) length, an outer diameter, and an inner diameter where the cylindrical vertical portion 724 can be disposed between the bushing 780 and the stopper portion 790 which are described below.

Therefore, in the present embodiment, an annular gap 730 which faces the groove portion 512 formed substantially in a dome shape is formed between the outer diameter of the body portion 710 of the inner collar 700 and the inner diameter of the body portion 721 of the outer collar 720 and the piston 760 described below is disposed to face the groove portion 512.

In the present embodiment, each of sealing and fixing regions A1 and A2 between an upper surface 560a of the first sealing region 560 of the diaphragm 520 and an upper surface 570a of the second sealing region 570, and the lower surface (the inner surface portion 531 and the outer surface portion 532 of the diaphragm accommodation recess portion 530) of the mounting portion 500, a sealing and fixing region A3 between a lower surface portion 560b of the first sealing region 560 of the diaphragm 520 and the upper surface 711 of the inner collar 700, and a sealing and fixing region A4 between a lower surface portion 29 of the second sealing region 570 and the upper surface 722 of the outer collar 720 adopts a sealing structure with a surface seal.

Further, in addition to the sealing structure with the surface seal, a sealing structure by a separate sealing member is also adopted.

In the present embodiment, two sealing grooves 740 which have annular shapes and large and small diameters are provided in the inner surface portion 531 and the outer surface portion 532 of the diaphragm accommodation recess portion 530 and O-rings 750 are respectively inserted into the sealing grooves 740, and further, sealing is performed by the O-rings 750 compressed against the upper surface 560a of the first sealing region 560 and the upper surface 570a of the second sealing region 570.

In the present embodiment, two sealing grooves 740 which have annular shapes and large and small diameters are provided in the upper surface 711 of the inner collar 700 and the upper surface 722 of the outer collar 720 and O-rings 750 are respectively inserted into the sealing grooves 740, and further, sealing is performed by the O-rings 750 compressed against the lower sealing portion 560b of the first sealing region 560 and a lower surface portion 570b of the second sealing region 570 and against the lower surface 500b of the mounting portion 500.

Since sealing is performed by the O-rings 750 compressed against the upper surface 560a of the first sealing region 560 and the upper surface 570a of the second sealing region 570, leakage of the measurement fluid R from the oil chamber 510 can be sufficiently prevented. However, according to the present embodiment, since several sealing structures are adopted as described above, even when the measurement fluid R leaks from the sealing structure of the first sealing region 560 and the second sealing region 570, the leakage of the measurement fluid R can be prevented by the other sealing structure regions. Therefore, it is possible to surely achieve the prevention of the leakage of the measurement fluid R from the oil chamber 510. Accordingly, the sealing reliability becomes extremely high.

Further, in the present embodiment, since the sealing structure is provided in the region where there is no relative movement as described above, the sealing durability is also high.

Any sealing member can be used as the sealing member as long as the sealing groove 740 is provided in one member constituting the sealing and fixing region and the abutment region and the O-ring 750 is inserted into the sealing groove 740, and further, sealing is performed by the O-ring 750 compressed against the other member. Further, there is no limitation as to which the sealing groove 740 and the O-ring 750 are provided to and any of them is within the scope of the invention.

In the present embodiment, the piston 760 (movable body) is constituted of a cylindrical portion 761 which is formed to be smaller in diameter than the outer diameter of the body portion 710 of the inner collar 700, a flange portion 762 which is also smaller in diameter than the outer diameter of the body portion 710 of the inner collar 700 and integrally provided continuously in the horizontal direction from the upper end edge of the cylindrical portion 761, a tapered cylindrical portion 763 which is integrally provided continuously in an upwardly extending manner in the vertical direction (axial direction) V from the outer circumferential end of the flange portion 762 in an expanded manner, a short cylindrical portion 764 of a large diameter which is continuously erected integrally from the upper end of the tapered cylindrical portion 763, and a pressing surface portion 765 of a flange shape which is integrally provided continuously in the horizontal direction from the short cylindrical portion 764.

A rod insertion hole passing through the cylindrical portion 761 in an up-down direction is provided in the center of the cylindrical portion 761. In the rod insertion hole, a receiving portion 769 on which a stepped portion of the tip end of the rod (not illustrated) can abut is provided and a large diameter hole portion 767 and a small diameter hole portion 768 are continuously formed.

A tip end of the rod (not illustrated) of a shock absorber (not illustrated) which constitutes the suspension and is inserted through the rod insertion hole to protrude from the upper surface of the cylindrical portion 761 is mounted and fixed through a nut (not illustrated), in such a manner that the piston 760 is provided to be movable in a longitudinal direction of the suspension.

Then, the pressing surface portion 765 of the piston 760 is positioned in the gap 730 of an annular shape between the outer diameter of the inner collar 700 and the inner diameter of the outer collar 720 and the diaphragm 520 is provided so as to be able to be pressed by the resilient force of a spring (not illustrated) of the suspension.

Further, in the piston 760 of the present embodiment, the inner surface of the short cylindrical portion 764 is guided to be able to move back and forth in the vertical direction (axial direction) V along the outer diameter of the body portion 710 of the inner collar 700 (the load (horizontal load) from a lateral direction according to the drawing is received by the inner collar 700).

In addition, since it is necessary for the sliding contact area between the piston 760 and the outer diameter of the inner collar 700 to be positioned in the radial direction, a spigot joint structure is adopted.

In the present embodiment, the piston 760 adopts a structure in which it is brought into contact with the diaphragm 520 via a pad 770.

The pad 770 is formed in an annular shape having a diameter where it is capable of abutting on the lower surface of the pressing region 580 of the diaphragm 520. Although the pad 770 is not particularly limited, it is preferable that a pad made of a hard synthetic resin material having excellent self-lubricating properties, for example, a polyacetal resin such as Delrin (registered trademark) be used because the pad 770 slides between the diaphragm 520 and the piston 760.

Further, even in a case where the piston 760 directly abuts on the diaphragm 520 without the pad 770, it is within the scope of the invention.

In the present embodiment, an annular protrusion 771 which protrudes upward in the vertical direction (axial direction) V continuously in the circumferential direction is integrally provided in the vicinity of the inner diameter of the upper surface of the pressing surface portion 765 of the piston 760. The protrusion 771 has an outer diameter to which the inner diameter of the pad 770 abutting on the upper surface of the pressing surface portion 765 of the piston 760 is fitted so as to suppress the horizontal displacement of the pad 770.

The bushing 780 (movable body) is constituted of a large diameter cylindrical portion 781 which is provided with a through hole 782 of a cylindrical shape which can internally accommodate the cylindrical portion 761 of the piston 760, a flange portion 783 which is integrally provided continuously from the upper end of the large diameter cylindrical portion 781 to the outside in the horizontal direction, an annular locking piece 784 which protrudes outward in the horizontal direction from the outer peripheral edge of the flange portion 783, and an annular wall portion 785 which protrudes upward in the vertical direction (axial direction) V from the upper surface of the flange portion 783. The large diameter cylindrical portion 781 is formed with the upper and lower surfaces opened. One end (upper end) of the coil spring (not illustrated) constituting the suspension abuts on the lower surface of the flange portion 783 in the vertical direction (axial direction) V (see Fig. 1).

In the present embodiment, the bushing 780 is provided integrally to the mounting portion 500 via the stopper portion 790.

The stopper portion 790 is adopted for improving the workability of the installation with respect to the suspension. In the present embodiment, the stopper portion 790 is constituted of an annular mounting portion 791 which is formed in an annular shape of which an outer diameter is the same as that of the outer collar 720 and an inner diameter is slightly larger than diameter of the cylindrical vertical portion 724 protruding from the lower surface of the outer collar 720 so as to be loosely fittable or is the same as the diameter of cylindrical vertical portion 724 so as to be fittable, a cylindrical portion 792 which is erected downward in the vertical direction (axial direction) V from the inner diameter of the annular mounting portion 791, and a locking flange portion 793 which protrudes inward in the horizontal direction from the lower end of the cylindrical portion 792.

A bolt insertion hole 794 is formed in the annular mounting portion 791 so as to be coaxially arranged in the vertical direction (axial direction) V with the bolt insertion hole 726 of the outer collar 720 and the bolt fixing hole 506 of the mounting portion 500.

Therefore, when the bolt insertion hole 794 of the stopper portion 790 is coaxially communicated with the bolt insertion hole 726 of the outer collar 720 and the bolt fixing hole 506 of the mounting portion 500 and those are fastened by the connecting bolt 550, the locking flange portion 793 locks the locking piece 784 of the bushing 780 so as to receive the locking piece 784 from below in the vertical direction (axial direction) V, in such a manner that the bushing 780 can be integrated with the mounting portion 500.

In this case, the cylindrical vertical portion 724 of the outer collar 720 is accommodated in an annular gap 800 formed between the outer surface of the annular wall portion 785 of the bushing 780 and the inner surface of the stopper portion 790.

Further, when the stopper portion 790 is attached, predetermined gaps 810 and 820 are respectively formed between the upper end surface of the annular wall portion 785 of the bushing 780 and the lower surface of the body portion 721 of the outer collar 720 and between the upper surface of the locking piece 784 of the bushing 780 and the lower end surface of the cylindrical vertical portion 724 of the outer collar 720. The bushing 780 can move in the vertical direction (axial direction) V within the range of the gaps 810 and 820.

The bearing device 900 (movable body) is interposed between the lower surface of the pressing surface portion 765 of the piston 760 and the upper surface of the flange portion 783 of the bushing 780 so as to be relatively rotatable. In the present embodiment, a thrust angular ball bearing constituted of an outer ring 901, an inner ring 902, a plurality of rolling elements (balls) 903 to be assembled between the outer ring 901 and the inner ring 902, and a retainer 904 for holding and guiding the rolling elements 903 is adopted. The inner ring 902 of the bearing device 900 is provided to be fitted to the inner surface of the annular wall portion 785 of the bushing 780.

The axis of the shock absorber (not illustrated) of the suspension and the axis of the spring (not illustrated) are offset, the spring input becomes a moment. Thus, the thrust angular ball bearing is applied to receive the moment load. In the present embodiment, a contact surface between the piston 760 (pad) and the diaphragm 520 is disposed so that an extension line in a contact angle direction of the thrust angular ball bearing (bearing device) 57 passes therethrough. That is, the contact angle of the thrust angular ball bearing (bearing device) 900 is selected so that a load acting line of the bearing is on the input of the spring (not illustrated) and a load acting line of the diaphragm 520, and thus high rigidity can be maintained.

Also in the present embodiment, as in the first embodiment, the pressure in the oil chamber 510 of the assembled weight measuring device 100 is controlled to be constant.

Specifically, in an operation of installing the pressure sensor 600 to the mounting portion (top plate) 500, first, the detection unit 601 of the pressure sensor 600 is inserted into the insertion portion 504 of the sensor connection portion 502 in a state where a load is not applied to the weight measuring device 100 and the pressure sensor 600 is screwed in the vertical direction (axial direction) V until the abutting flange surface portion 603 is brought into close contact with the opening edge of the sensor connection portion 502.

In this case, since the pressure sensor 600 enters until the tip end detection surface 602 of the pressure sensor 600 faces the inner side of the oil chamber 510 (fluid reservoir 511), the measurement fluid (hydraulic oil) R pushed by the pressure sensor 600 becomes excessive with respect to the volume of the oil chamber 510, and thus the measurement fluid (hydraulic oil) R is discharged from the oil discharge hole portion 240.

When the discharge of the measurement fluid (hydraulic oil) R is finished, the hole portion is completely sealed by a sealing portion 242 formed by welding an opening 240a of the oil discharge hole portion 240 without applying a load. As a result, the pressure in (inside) the oil chamber 510 is managed in a state of being equilibrated with the atmospheric pressure.

The oil discharge hole portion 240 extends vertically upward from the oil chamber 510 (inner side), and thus the oil chamber 510 and the upper surface 500a (atmosphere side) of the mounting portion (top plate) 500 are linearly communicated with each other and the opening 240a open to the upper surface 500a is formed. Further, the groove portion 241 of a short cylindrical shape is recessed on the upper surface 500a of the mounting portion 500 and the opening 240a of an oil discharge hole portion 240 passing through the mounting portion 500 is formed in the bottom surface portion of the groove portion 241, and further, the opening 240a is open in the bottom surface portion of the groove portion 241 as a pin hole.

Other configurations and operational effects of the oil discharge hole portion 240 and the sealing portion 242 are similar to those of the first embodiment described above, so that the description thereof will be omitted here.

In this embodiment, in order to further enhance the sealing performance, the groove portion 241 may be covered with a cap. The configurations and effects of the cap are similar to those of the cap in the first embodiment, so that the description thereof will be omitted here.

### Third Embodiment

Figs. 9 to 11B illustrate a third embodiment.

The present embodiment is an embodiment applied to a suspension for a rear wheel of an automobile and different from the first embodiment in the seal structure provided between the diaphragm 230 and the bottom plate 200 and between the diaphragm 230 and the collar 220. Hereinafter, the sealing structure which is a characteristic part of the present embodiment will be described. Further, the other constituent parts and operational effects are similar to those of the first embodiment, so that the description thereof will be omitted by citing the first embodiment.

The seal structure in the present embodiment has a characteristic structure in that a sealing member is integrally formed in the diaphragm 230.

In the diaphragm 230, a first sealing member 10 and a second sealing member 11 are integrally molded in the lower surface portion 233a on a side facing the oil chamber 201 and the upper surface portion 233b on an opposite side.

In the present embodiment, the first sealing groove 251a used in the first embodiment is utilized and the first sealing member 10 is accommodated in the sealing groove 251a in a compressed manner to seal a gap between the first sealing member and the bottom plate 200.

Similarly, the second sealing groove 251b used in the first embodiment is utilized and the second sealing member 11 is accommodated in the second sealing groove 251b in a compressed manner to seal a gap between the second sealing member and the collar 220.

The first sealing member 10 includes a base end portion 10a of an annular shape which is integrally erected from a base portion 12 and a seal lip 10b of an annular shape which protrudes in a substantially triangular shape in a cross-sectional view at the tip end side of the base end portion 10a.

In the present embodiment, recess portions 10c and 10d of an annular shape are respectively provided on the inner side surface portion and the outer side surface portion of the base end portion 10a in the radial direction.

Specifically, the recess portion 10c on the inner side is a region constantly in contact with the measurement fluid (hydraulic oil) R in the oil chamber 201. When the pressure in the oil chamber 201 increases and the measurement fluid (hydraulic oil) R presses the recess portion 10c of the first sealing member 10, the first sealing member 10 is compressed and brought into close contact with a sealing groove 251a.

The second sealing member 11 is formed in substantially the same shape as the first sealing member 10. The second sealing member 11 includes a base end portion 11a of an annular shape which is integrally erected from the base portion 12 and a seal lip 11b of an annular shape which protrudes in a substantially triangular shape in a cross-sectional view at the tip end side of the base end portion 11a and includes a recess portion 11c on the inner side and a recess portion 11d on the outer side.

The base portion 12 is integrally molded into a thin annular shape in a part of the lower surface portion 233a and the upper surface portion 233b of the diaphragm 230 which is the part close to an outer diameter end surface 233c. Further, the base portion 12 extends over the lower surface portion 233a and the upper surface portion 233b and is integrally molded in a substantially U-shape in a cross-sectional view so as to cover an outer diameter side region of the diaphragm 230 and straddle the outer diameter end surface 233c.

It is preferable that a sealing member suitable for the type of oil sealed in the oil chamber 201, the temperature range, or the like be adopted as the sealing member (first sealing member 10, second sealing member 11, base portion 12) which is integrally molded in the diaphragm 230 and, for example, nitrile rubber, fluoro-rubber or the like are assumed. The material of the sealing member (first sealing member 10, second sealing member 11, base portion 12) is not to be construed as being limited thereto and the design can be changed to an optimum one as appropriate within the scope of the invention.

According to the present embodiment, since the sealing member is configured as described above, the recess portion 10c of the first sealing member 10 provided on the diaphragm 230 is pressed (pressurized) when a load is applied to the pressure sensor 400 and the pressure in the oil chamber 201 increases. When a pressing force is applied to the recess portion 10c as described above, the first sealing member 10 elastically deforms in the axial direction V and the radial direction D of the diaphragm 230 and a sealing surface (10b') of the seal lip 10b is pressed against the first sealing groove 251a according to the pressure, and thus the first sealing member 10 can maintain the high sealability. Further, the surface pressure of the sealing surface increases or decreases according to the pressure increase.

Even when the hydraulic oil R leaks from the first sealing member 10, the second sealing member 11 performs sealing with the same mechanism as the first sealing member 10, and thus high sealability can be maintained.

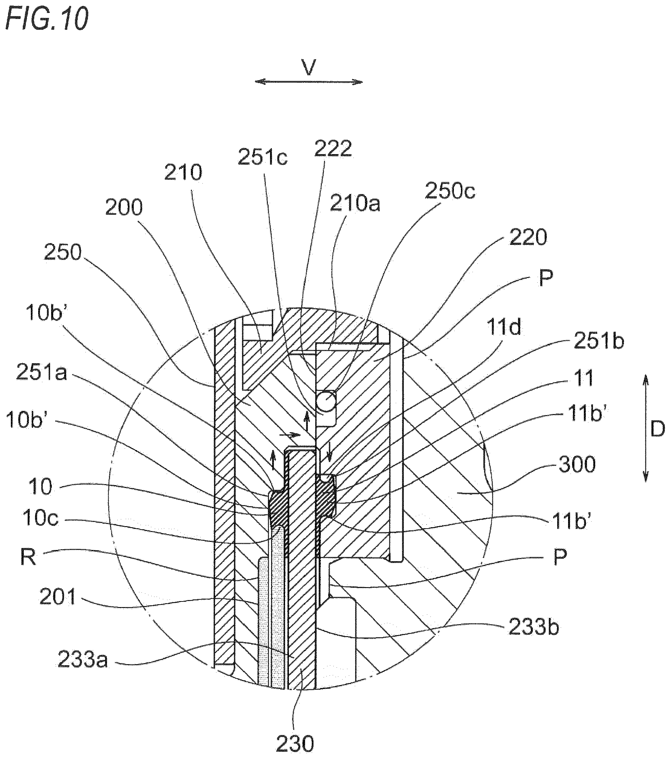

That is, assuming that the hydraulic oil R flows out from the first sealing member 10, it is considered that the hydraulic oil R enters a gap between the diaphragm 230 and the collar 220 along the diaphragm 230 as indicated by an arrow in Fig. 10.

The hydraulic oil R reaches the recess portion 11d on the outer side of the second sealing member 11 and presses the recess portion 11d. Therefore, the second sealing member 11 of which the recess portion 11d is pressed elastically deforms in the axial direction V and the radial direction D of the diaphragm 230 and a sealing surface (11b') of the seal lip 11b is pressed against the second sealing groove 251b according to the pressure, and thus a higher sealability is given.

Furthermore, as similar to the first embodiment, in the present embodiment, the third sealing groove 251c of an annular shape is provided on the lower surface 222 of the collar 220 further in a larger diameter direction than the second sealing groove 251b and the third O-ring 250c is inserted into the third sealing groove 251c, and then the third O-ring 250c is compressed against the upper surface portion 233b of the sealing region 233, in such a manner that sealing is performed.

Therefore, assuming that the hydraulic oil R flows out from the first sealing member 10, it is considered that the hydraulic oil R enters a gap between the bottom plate 200 and the collar 220 and flows out in the radial direction as indicated by an arrow in Fig. 10. However, this region is sealed by the third O-ring 250c, and thus higher sealability can be maintained.

According to the present embodiment, since it is configured as described above, only the third O-ring 250c is provided as an O-ring, and thus the assemblability is improved as compared with the three O-ring arrangement configuration of the first embodiment. In addition, the gross area for preparing the sealing surface (polished surface) may also be reduced, and thus it is possible to reduce the polishing cost. Therefore, cost reduction can also be achieved.

Although not illustrated, it is also possible to adopt a structure in which a sealing member which is inserted into the third sealing groove 251c and compressible is annularly molded integrally with the bottom plate 200, in place of the third O-ring 250c and this is within the scope of the invention. In this case, the shape of the sealing member may be similar to that of the first sealing member 10 or the second sealing member 11 and the shape and material which can exhibit the optimum sealing performance in the invention are appropriately selected.

In the present embodiment, the first sealing member 10 and the second sealing member 11 are molded one by one in the radial direction on the lower surface portion 233a and the upper surface portion 233b of the diaphragm 230. However, it is also possible to adopt a configuration in which a plurality of first sealing members 10 and a plurality of second sealing members 11 are integrally molded in the radial direction. Further, it is also possible to assume that the number of sealing members provided on the lower surface portion 233 of the diaphragm 230 and the number of sealing members provided on the upper surface portion 233b are set to be different from each other.

It is also within the scope of the invention to adopt a configuration in which each of the seal lip 10b and the seal lip 11b is branched into a plurality of seal lips.

Further, in the present embodiment, although the configuration in which the first sealing member 10, the second sealing member 11, the third O-ring 250c are respectively inserted into the sealing grooves (first sealing groove 251a, second sealing groove 251b, third sealing groove 251c) and compressed is adopted, the form of the seal grooves (first sealing groove 251a, second sealing groove 251b, third sealing groove 251c) is also arbitrary. In addition, a configuration in which the O-rings are compressed by being directly pressed against the inner surface portion 232 of the diaphragm accommodation recess portion 231, the lower surface 222 of the collar 220, or the upper surface portion 233b of the sealing region 233 or the like without providing those seal grooves so that sealing is performed is also within the scope of the invention.

### Fourth Embodiment

Figs. 12 to 13B illustrate a fourth embodiment.

The present embodiment is an embodiment in which the shape of the sealing member (first sealing member 10 and second sealing member 11) is different from that of the third embodiment. That is, the sealing members (first sealing member 10 and second sealing member 11) are formed in a substantially hemispherical shape in a cross-sectional view.

According to the present embodiment, the shape of the sealing member is simplified, and thus the cost for forming the sealing member can be reduced.

Other configurations and operational effects are similar to those of the first embodiment and the third embodiment and the description thereof will be omitted.

### Fifth Embodiment

Figs. 14 to 16B illustrate a fifth embodiment.

The present embodiment is an embodiment where, in the diaphragm 230, the sealing member (first sealing member 10) is integrally molded only on a surface portion on a side facing the oil chamber 201, that is, the lower surface portion 233a facing the inner surface portion 232 of the diaphragm accommodation recess portion 231. Therefore, the upper surface portion 233b is a polished surface.

In the present embodiment, a fourth sealing member 13 is integrally formed on a surface portion (lower surface 222) of the collar 220 which is the surface portion facing the diaphragm 230.

The fourth sealing member 13 is formed in a thin annular shape covering substantially the entire area of the lower surface 222 of the collar 220 and performs sealing between the upper surface portion 233b of the diaphragm 230 and the collar 220 and between the bottom plate 200 and the collar 220 instead of the second sealing member 11 and the third O-ring 250c.

The material of the fourth sealing member 13 can be the same as that of the first sealing member 10 or the like. According to the present embodiment, it is possible to perform sealing without using the third O-ring 250c, and thus it possible to improve the assemblability and reduce the polished surface (cost reduction).

In the present embodiment, the sealing member shape illustrated in the third embodiment is adopted. However, it is also possible to adopt the simplified sealing member shape described in the fourth embodiment and this is within the scope of the invention. Further, even in the present embodiment, it is possible to suppress the cost for forming the sealing member by adopting such a configuration.

Other configurations and operational effects are similar to those of the first embodiment and the third embodiment, and the description thereof will be omitted.

### Sixth Embodiment

Figs. 17 to 19B illustrate a sixth embodiment.

This embodiment is different from the second embodiment in the seal structure provided between the hollow (hollow type) diaphragm 520 and a top plate 500 and between the diaphragm 520 and the collar (inner collar 700, outer collar 720). In the present embodiment, sealing members (fifth sealing member 15, sixth sealing member 16, seventh sealing member 17, and eighth sealing member 18) are formed integrally with the diaphragm 520 as similar to the third to fifth embodiments

Hereinafter, the sealing structure which is a characteristic part of the present embodiment will be described. Further, the other constituent parts and operational effects are similar to those of the second embodiment and the third embodiment, so that the description thereof will be omitted by citing the second embodiment.

In the diaphragm 520 of the present embodiment, the fifth sealing member 15 and the sixth sealing member 16 are integrally molded on the first sealing region 560 side and the seventh sealing member 17 and the eighth sealing member 18 are integrally molded on the second sealing region 570 side.

In the present embodiment, respective sealing grooves 740 used in the second embodiment are utilized and the fifth sealing member 15 to the eighth sealing member 18 are respectively accommodated in the sealing grooves 740 in a compressed manner, in such a manner that the first sealing region 560 and the second sealing region 570 (between the diaphragm 520 and the top plate 500, between the diaphragm 520 and the inner collar 700, between the diaphragm 520 and the outer collar 720).

The fifth sealing member 15 includes a base end portion 15a of an annular shape which is integrally erected from a base portion 19 and a seal lip 15b of an annular shape which protrudes in a substantially triangular shape in a cross-sectional view at the tip end side of the base end portion 15a.

The sixth sealing member 16 is formed in substantially the same shape as the fifth sealing member 15 and includes a base end portion 16a of an annular shape which is integrally erected from the base portion 19 and a seal lip 16b of an annular shape which protrudes in a substantially triangular shape in a cross-sectional view at the tip end side of the base end portion 16a.

The base portion 19 is integrally molded into a thin annular shape in a part of the upper surface portion 560a and the lower surface portion 560b of the first sealing region 560 of the diaphragm 520 which is the part close to an inner diameter end surface 560c. Further, the base portion 19 extends over the upper surface portion 560a and the lower surface portion 560b and is integrally molded in a substantially U-shape in a cross-sectional view so as to cover an inner diameter side region of the diaphragm 520 and straddle the inner diameter end surface 560c.

The seventh sealing member 17 includes a base end portion 17a of an annular shape which is integrally erected from a base portion 20 and a seal lip 17b of an annular shape which protrudes in a substantially triangular shape in a cross-sectional view at the tip end side of the base end portion 17a.

The eighth sealing member 18 is formed in substantially the same shape as the seventh sealing member 17 and includes a base end portion 18a of an annular shape which is integrally erected from the base portion 20 and a seal lip 18b of an annular shape which protrudes in a substantially triangular shape in a cross-sectional view at the tip end side of the base end portion 18a.

The base portion 20 is integrally molded into a thin annular shape in a part of the upper surface portion 570a and the lower surface portion 570b of the second sealing region 570 of the diaphragm 520 which is the part close to an outer diameter end surface 570c. Further, the base portion 20 extends over the upper surface portion 570a and the lower surface portion 570b and is integrally molded in a substantially U-shape in a cross-sectional view so as to cover an outer diameter side region of the diaphragm 520 and straddle the outer diameter end surface 570c.

According to the present embodiment, the weight measuring device is configured as described above. Therefore, when a load is applied to the pressure sensor 400 and the pressure in the oil chamber 201 rises, the recess portion 15c of the sealing member 15 provided in the diaphragm 520 is pressed (pressurized).

When the pressing force is applied to the recess portion 15c as described above, the fifth sealing member 15 elastically deforms in the axial direction V and the radial direction D of the diaphragm 520 and a sealing surface (15b') of the seal lip 15b is pressed against a sealing groove 740 in accordance with the pressure. Therefore, the fifth sealing member 15 can maintain the high sealability. Further, the surface pressure of the sealing surface increases or decreases according to the pressure increase.

Even when the hydraulic oil R leaks from the fifth sealing member 15, the sixth sealing member 16 performs sealing with the same mechanism as the fifth sealing member 15, and thus high sealability can be maintained.

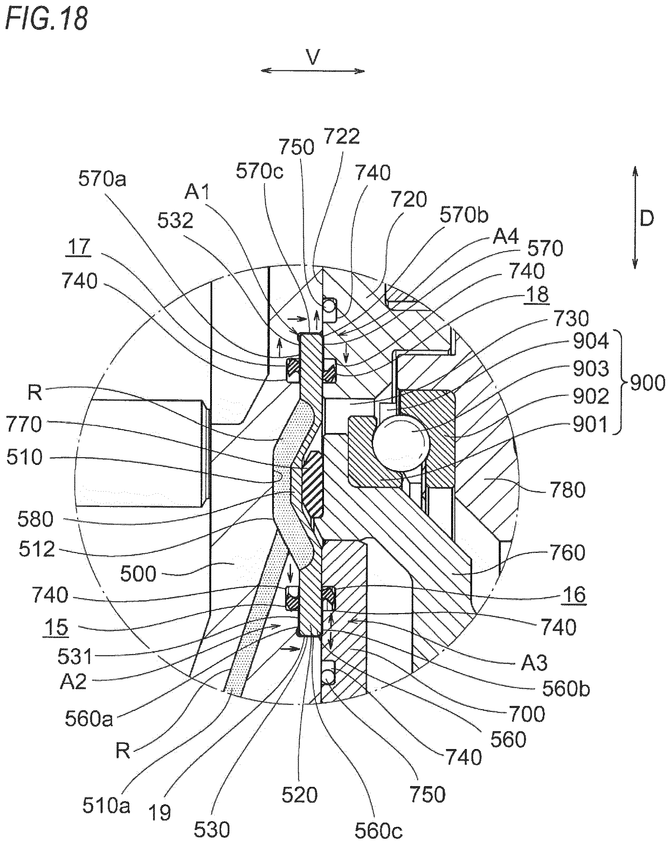

That is, assuming that the hydraulic oil R flows out from the fifth sealing member 15, it is considered that the hydraulic oil R enters a gap between the diaphragm 520 and the inner collar 700 along the diaphragm 520 as indicated by an arrow in Fig. 18.

The hydraulic oil R reaches the recess portion 16d on the outer side of the sixth sealing member 16 and presses (pressurizes) the recess portion 16d. Therefore, the sixth sealing member 16 of which the recess portion 16d is pressed deforms elastically in the axial direction V and the radial direction D of the diaphragm 520 and a sealing surface (16b') of the seal lip 16b is pressed against the sealing groove 740 according to the pressure, and thus a higher sealability is given.

Furthermore, similarly to the first embodiment, in the present embodiment, the third sealing groove 740 of an annular shape is provided on the upper surface 722 of the inner collar 700 further in a larger diameter direction than the sealing groove 740 and the O-ring 750 is inserted into the sealing groove 740, and thus sealing is performed by compressing the O-ring 750.

Therefore, assuming that the hydraulic oil R flows out from the fifth sealing member 15, it is considered that, as described above, the hydraulic oil R enters a gap between the top plate 500 and the collar 700 and flows out in the radial direction as indicated by an arrow in Fig. 18. However, this region is sealed by the O-ring 750, and thus higher sealability can be maintained.

The operational effects of the seventh sealing member 17 and the eighth sealing member 18 are similar to those of the fifth sealing member 15 and the sixth sealing member 16 described above, so that the description thereof will be omitted.

According to the present embodiment, since it is configured as described above, only the O-ring 750 disposed between the inner collar 700 and the top plate 500 and the O-ring 750 disposed between the outer collar 720 and the top plate 500 are provided as an O-ring, and thus the assemblability is improved as compared with the six O-ring arrangement configuration of the second embodiment. In addition, the gross area for preparing the sealing surface (polished surface) may also be reduced, and thus it is possible to reduce the polishing cost. Therefore, cost reduction can also be achieved.

Further, the seal structure described in the third to sixth embodiments can be applied to other than the weight measuring device having the oil discharge hole portion and the sealing portion described in the first and second embodiments. That is the weight measuring device of the present embodiment includes any of the following configurations (i) to (iii).
(i) A weight measuring device for a vehicle includes:
   a movable body which is moved by a resilient force of a spring;
   a diaphragm which is pressure-deformable by the movement of the movable body;
   an oil chamber which is filled with a predetermined measurement fluid and whose internal pressure can be changed an internal pressure by pressing of the diaphragm; and
   a pressure sensor which can detect a pressure change in the oil chamber, in which
   a sealing member is integrally molded in the diaphragm on at least a surface portion on a side facing the oil chamber.
(ii) A weight measuring device for a vehicle includes:
   a bottom plate which is disposed in a state where a lower surface side abuts on an arm of a suspension and has a groove portion open to an upper surface side;
   a diaphragm which covers an opening area of the groove portion and forms an oil chamber of a predetermined space filled with a predetermined measurement fluid together with the groove portion;
   an annular collar which is formed to have a diameter larger than an outer diameter of the opening area of the groove portion and seals and fixes a surface portion of the diaphragm which is the surface portion closer to an outer diameter by pinching the surface portion with a surface portion located further on an outer side than the opening area of the groove portion;
   a piston which is provided on an inner diameter side of the collar to be movable in a longitudinal direction of the suspension, disposed on an upper side of the collar with a gap between the piston and the collar, and can press the diaphragm by a resilient force of a spring of the suspension;
   a spring seat which receives one end of the spring and is interposed with respect to the piston; and
   a pressure sensor which is provided on a lower surface side of the bottom plate and can detect a pressure change of measurement fluid in the oil chamber which can be changed by movement of the piston, in which
   a sealing member is integrally molded in the diaphragm on at least a surface portion on a side facing the oil chamber.
(iii) A weight measuring device for a vehicle is provided in a suspension and includes:
   a mounting portion of which an upper surface side is fixed to a vehicle side and in which a groove portion open in an annular shape is provided on a lower surface side;
   an annular diaphragm which covers an opening area of the groove portion and forms an oil chamber of a predetermined space together with the groove portion;
   an annular inner collar which seals and fixes a surface portion of the diaphragm which is the surface portion closer to an inner diameter by pinching the surface portion with a surface portion located further on an inner side than the opening area of the groove portion;
   an annular outer collar which is formed to have a diameter larger than an outer diameter of the opening area of the groove portion and seals and fixes a surface portion of the diaphragm which is the surface portion closer to the outer diameter by pinching the surface portion with a surface portion located further on an outer side than the opening area of the groove portion;
   a piston which is provided between an outer diameter of the inner collar and an inner diameter of the outer collar to be movable in a longitudinal direction of the suspension and can press the diaphragm by a resilient force of a spring of the suspension;
   a bushing which receives one end of the spring;
   a bearing device which is interposed between the piston and the bushing and configured to be relatively rotatable; and
   a pressure sensor which is provided on the mounting portion and can detect a pressure change of measurement fluid in the oil chamber which can be changed by movement of the piston, in which
   a sealing member is integrally molded in the diaphragm on at least a surface portion on a side facing the oil chamber.

### Industrial Applicability

The invention can also be used for a suspension having other configurations, regardless of the suspensions having the configurations described in the present embodiments.

The present application is based on Japanese Patent Application No. 2016-141097 filed on July 19. 2016 and Japanese Patent Application No. 2017-36403 filed on February 28, 2017, the contents of which are incorporated herein by reference.

### Description of Reference Numerals

1: suspension
2: arm
5: coil spring (spring)
100: weight measuring device for vehicle
200: bottom plate
201: oil chamber
202: groove portion
202a: opening region
203: lower surface of bottom plate
220: collar
240: oil discharge hole portion
242: sealing portion
300: piston
340: spring seat
400: pressure sensor
R: measurement fluid (hydraulic oil)

## Claims

1. A weight measuring device for a vehicle comprising:
a movable body which is moved by a resilient force of a spring;
a diaphragm which is pressure-deformable by the movement of the movable body;
an oil chamber which is filled with a predetermined measurement fluid and whose internal pressure is capable of being changed by pressing of the diaphragm;
a pressure sensor capable of detecting a pressure change in the oil chamber;
an oil discharge hole portion capable of discharging excess hydraulic oil in the oil chamber to the atmosphere side; and
a sealing portion which is formed by sealing the oil discharge hole portion discharging the excess hydraulic oil.

2. The weight measuring device for a vehicle according to claim 1, further comprising:
a mounting portion to which the pressure sensor is mounted and which cooperates with the diaphragm to form the oil chamber, wherein
the oil discharge hole portion is formed in the mounting portion.

3. A weight measuring device for a vehicle comprising:
a bottom plate which is disposed in a state where a lower surface side abuts on an arm of a suspension and has a groove portion open to an upper surface side;
a diaphragm which covers an opening area of the groove portion and forms an oil chamber of a predetermined space filled with a predetermined measurement fluid together with the groove portion;
an annular collar which is formed to have a diameter larger than an outer diameter of the opening area of the groove portion and seals and fixes a surface portion of the diaphragm which is the surface portion closer to an outer diameter by pinching the surface portion with a surface portion located further on an outer side than the opening area of the groove portion;
a piston which is provided on an inner diameter side of the collar to be movable in a longitudinal direction of the suspension, disposed on an upper side of the collar with a gap between the piston and the collar, and is capable of pressing the diaphragm by a resilient force of a spring of the suspension;
a spring seat which receives one end of the spring and is interposed with respect to the piston, and a pressure sensor which is provided on a lower surface side of the bottom plate and is capable of detecting a pressure change of the measurement fluid in the oil chamber which is capable of being changed by movement of the piston;
an oil discharge hole portion capable of discharging excess hydraulic oil in the oil chamber to the atmosphere side; and
a sealing portion which is formed by sealing the oil discharge hole portion through which the excess hydraulic oil has been discharged.

4. A weight measuring device for a vehicle which is provided in a suspension, comprising:
a mounting portion of which an upper surface side is fixed to a vehicle side and in which a groove portion open in an annular shape is provided on a lower surface side;
an annular diaphragm which covers an opening area of the groove portion and forms an oil chamber of a predetermined space together with the groove portion;
an annular inner collar which seals and fixes a surface portion of the diaphragm which is the surface portion closer to an inner diameter by pinching the surface portion with a surface portion located further on an inner side than the opening area of the groove portion
an annular outer collar which is formed to have a diameter larger than an outer diameter of the opening area of the groove portion and seals and fixes a surface portion of the diaphragm which is the surface portion closer to the outer diameter by pinching the surface portion with a surface portion located further on an outer side than the opening area of the groove portion;
a piston which is provided between an outer diameter of the inner collar and an inner diameter of the outer collar to be movable in a longitudinal direction of the suspension and is capable of pressing the diaphragm by a resilient force of a spring of the suspension;
a bushing which receives one end of the spring;
a bearing device which is interposed between the piston and the bushing and configured to be relatively rotatable, and a pressure sensor which is provided on the mounting portion and is capable of detecting a pressure change of measurement fluid in the oil chamber which is capable of being changed by movement of the piston;
an oil discharge hole portion which is capable of discharging excess hydraulic oil in the oil chamber to the atmosphere side; and
a sealing portion which is formed by sealing the oil discharge hole portion through which the excess hydraulic oil has been discharged.

5. The weight measuring device for a vehicle according to any one of claims 1 to 4, wherein
a sealing member is integrally molded in the diaphragm on at least a surface portion on a side facing the oil chamber.

6. The weight measuring device for a vehicle according to any one of claims 1 to 4, wherein
sealing members are integrally molded in the diaphragm on a surface portion on a side facing the oil chamber and on a surface portion on an opposite side, respectively.
